# EUROPÄISCHE PATENTSCHRIFT

(11) **EP 3 391 731 B1**
(45) Veröffentlichungstag und Bekanntmachung des Hinweises auf die Patenterteilung: **25.11.2020**
(21) Anmeldenummer: 18000350.1
(22) Anmeldetag: 13.04.2018
(51) Int. Cl.: A01F 15/14, B65B 13/32

(54) **BALLENPRESSE**
BALING PRESS
PRESSE À BALLES

(30) Priorität: 21.04.2017 DE 102017003880
(43) Veröffentlichungstag der Anmeldung: 24.10.2018
(73) Patentinhaber: Maschinenfabrik Bernard Krone GmbH & Co. KG, 48480 Spelle (DE)
(72) Erfinder: Kreyenhagen, Michael, 49163 Bohmte (DE)
(74) Vertreter: Pott, Ulrich

(56) Entgegenhaltungen:
- EP-A1- 2 562 091
- WO-A1-93/13988
- WO-A1-2014/144235
- WO-A1-2014/144470
- DE-A1-102008 022 970
- US-A1- 2015 272 010

## Beschreibung

Die Erfindung betrifft eine Ballenpresse für landwirtschaftliches Erntegut. Die Ballenpresse weist einen Presskanal und mindestens eine Bindeeinrichtung für ein bandförmiges Bindematerial, vorzugsweise aus verschweißbarem oder verklebbarem Kunststoff, auf. Das bandförmige Bindematerial dient der Umhüllung des zu pressenden Ballen. Die Bindeeinrichtung weißt weiterhin einen Bindetisch mit einem das Bindematerial stoffschlüssig verbindenden Stoffschlusserzeuger auf.

Derartige Ballenpressen sind beispielsweise aus der WO 93/13988 bekannt. Anwendbar sind sie im Bereich der Landwirtschaft, um beispielsweise Stroh oder Heu zu Ballen zu pressen. Derartige Ballenpressen können jedoch auch stationär betrieben werden. In der Landwirtschaft besteht ein Bedarf an hochleistungsfähigen, insbesondere hochverdichtenden, Ballenpressen mit einem hohen Durchsatz an Erntegut und einer hohen Zuverlässigkeit.

Aufgabe der vorliegenden Erfindung ist es, eine Ballenpresse der eingangs genannten Art in ihrer Leistungsfähigkeit und ihrer Zuverlässigkeit zu verbessern.

Erfindungsgemäß wird die Aufgabe dadurch gelöst, dass die Bindeeinrichtung einen Gegenhalter umfasst, welcher schwenkbeweglich um eine Gegenhalterschwenkachse angeordnet ist. Die Gegenhalterschwenkachse ist in einer oder parallel zu einer Vertikalebene positioniert, die senkrecht zu einer Bodenebene des Presskanals ist und die Längsmittelachse des Presskanals umfasst. Außerdem ist die Gegenhalterschwenkachse vorzugsweise im Wesentlichen orthogonal zur Bodenebene positioniert. Die Bodenebene umfasst dabei eine der Bindeeinrichtung abgewandte und im Wesentlichen ebene Seite des Presskanals. Der Gegenhalter kann aufgrund seiner beweglichen Anordnung zwischen einer Gegenhalteposition und einer Ausweichposition wechseln. In einer Gegenhalteposition kann gegen den Gegenhalter das Bindematerial geklemmt und somit durch die Bindeeinrichtung festgelegt werden, wobei sich der Gegenhalter zumindest zwischen einem Abschnitt des Bindematerials und dem Presskanal befindet. Bei Festlegung des Bindematerials in der Gegenhalteposition ist der Gegenhalter ortsfest. In der Ausweichposition befindet sich der Gegenhalter außerhalb eines Bindematerialraumes. Dieser Bindematerialraum wird begrenzt durch zwei zur Vertikalebene parallele Ebenen, in denen jeweils eine Schmalseite des Bindematerialquerschnittes des den entstehenden Ballen umschlingenden Bindematerials liegt. In der Ausweichposition kann somit Bindematerial im Bindematerialraum mit beliebigem Abstand zum Presskanal am Gegenhalter vorbeigeführt werden, was zur Herstellung eines Überlappungsbereiches des Bindematerials im Bereich des Stoffschlusserzeugers nötig ist. Durch die schwenkbewegliche Anordnung des Gegenhalters kann dieser dem Bindematerial aufgrund dessen Bindematerialspannung auf einfache Weise ausweichen. Die beschriebene Ausrichtung der Gegenhalterschwenkachse erleichtert ein bindematerialinduziertes Ausweichen des Gegenhalters und gewährleistet einen einfachen Aufbau des Gegenhalters, dessen Bewegung von der Gegenhalteposition in die Ausweichposition somit nicht aktiv gesteuert werden muss. Der folglich mögliche einfache Aufbau erhöht die Zuverlässigkeit der Bindeeinrichtung und damit der Ballenpresse. Die Leistungsfähigkeit wird durch eine Verkürzung der Dauer eines Bindezyklus erhöht, da die Überführung des Gegenhalters in die Ausweichposition und die Führung des Bindematerials am Gegenhalter vorbei gleichzeitig stattfinden. Der Bindezyklus beschreibt den Vorgang, durch den die Bindeeinrichtung das einen Ballen nach seiner fertigen Pressung umhüllende Bindematerial verbindet.

Erfindungsgemäß ist ein Federelement vorgesehen, das bei ausbleibender Krafteinwirkung durch das bandförmige Bindematerial den Gegenhalter in die Gegenhalteposition zurückstellt. Das Federelement ist am Gegenhalter als ein Gegenhalterrückstellelement angeordnet, das den Gegenhalter mit einer den Gegenhalter in die Gegenhalteposition bewegenden Kraft beaufschlagt. Das Gegenhalterrückstellelement bewegt den Gegenhalter, nachdem er dem Bindematerial ausgewichen ist, wieder zurück in eine Gegenhalteposition. In dieser kann gegen ihn ein Abschnitt des den folgenden Ballen umschlingenden Bindematerials festgelegt werden. Durch die Verwendung eines Gegenhalterrückstellelementes ist eine gezielte Steuerung der Bewegung des Gegenhalters von der Ausweichposition in die Gegenhalteposition entbehrlich und die Wiederholbarkeit der Festlegung des Bindematerials ist sichergestellt. Dies erhöht die Leistungsfähigkeit der Bindeeinrichtung und damit der Ballenpresse. Vorteilhafterweise weist der Gegenhalter einen als Gegenschneide für eine Schneidvorrichtung ausgebildeten Bereich auf. Die Schneidvorrichtung ist zur Trennung des einen fertigen Ballen umschlingenden Bindematerials vom restlichen Bindematerial nötig. Der Gegenhalter und die Gegenschneide der Schneidvorrichtung sind somit einstückig ausgebildet. Dies verringert den baulichen Aufwand und verringert die Anzahl ausfallrisikobehafteter Bauteile der Ballenpresse. Zudem wird durch das Vorsehen einer Gegenschneide die Zuverlässigkeit des Schneidvorgangs erhöht, das Bindematerial wird besonders zuverlässig getrennt. Hierdurch ist auch die Zuverlässigkeit und Leistungsfähigkeit der Ballenpresse erhöht.

Vorzugsweise weisen der Gegenhalter und ein das Bindematerial auf dem Gegenhalter klemmender Klemmarm eine Fixieranordnung auf. Die Fixieranordnung umfasst einen zu einem Teil des Klemmarms komplementär ausgebildeten Bereich am Gegenhalter, durch die der Gegenhalter in einer Klemmstellung formschlüssig in der Gegenhalteposition fixierbar ist. Durch die Fixieranordnung wird verhindert, dass der schwenkbewegliche Gegenhalter in der Klemmstellung verschwenkt und dabei die Klemmung des Bindematerials löst. Die Fixieranordnung legt den Gegenhalter relativ zu dem Klemmarm in der Klemmstellung fest. Hierdurch wird die Zuverlässigkeit der Klemmung in der vorderen Klemmvorrichtung erhöht. Dies erhöht die Zuverlässigkeit der Ballenpresse.

Vorzugsweise ist der Bindeeinrichtung mindestens eine eine stoffschlüssige Verbindung des Bindematerials kühlende Kühlungseinrichtung zugeordnet. Die Kühlungseinrichtung kühlt die Stelle, an der das Bindematerial stoffschlüssig verbunden wird oder verbunden worden ist. Das Aushärten der stoffschlüssigen Verbindung des Bindematerials wird somit beschleunigt und die Zeitdauer des Bindezyklus reduziert. Eine geringere für den Bindezyklus nötige Zeitdauer ermöglicht ein besonders schnelles Pressen des Ernteguts und somit eine Erhöhung der Leistungsfähigkeit der Ballenpresse. Die Kühlung der stoffschlüssigen Verbindung dient zudem der Erhöhung der Zuverlässigkeit dieser Verbindung. Die gepressten Ballen werden zuverlässig gebunden, was die Leistungsfähigkeit und Zuverlässigkeit der Ballenpresse weiter steigert.

Vorzugsweise weist der Stoffschlusserzeuger eine mindestens zwei Bereiche des Bindematerials verschweißende Schweißeinrichtung auf. Die zwei Bereiche des Bindematerials sind beim Verschweißen jeweils mit der Längsseite ihres Querschnittes zumindest teilweise aneinander anliegend angeordnet. Hierdurch wird eine große Auflagefläche und Verbindungsfläche der stoffschlüssigen Verbindung erreicht. Die Verwendung einer Schweißeinrichtung als Stoffschlusserzeuger ermöglicht die zügige und zuverlässige Erzeugung einer stoffschlüssigen Verbindung. Hierdurch kann die stoffschlüssige Verbindung mit dem Bindezyklus, der nur kurze Zeitdauer benötigt, erzeugt werden. Somit kann die Anzahl der in einer vorgegebenen Zeit gebundenen Ballen und somit die Leistungsfähigkeit der Ballenpresse erhöht werden.

Besonders bevorzugt sind die zwei Bereiche des Bindematerials so angeordnet, dass die eine Längsseite des Querschnittes des Bindematerials auf der anderen Längsseite des Querschnittes desselben Bindematerials liegt. Somit wird die stoffschlüssige Verbindung im Wesentlichen durch Spannungen in der Ebene der Verbindung beansprucht, die durch eine stoffschlüssige Verbindung besonders gut aufgenommen werden können. Die Form der Anordnung der zwei zu verschweißenden Bereiche des Bindematerials während des Verschweißens erhöht somit die Festigkeit der stoffschlüssigen Verbindung und ermöglich somit höhere Dichten der Ballen und eine zuverlässigere Verbindung. Somit wird eine leistungsfähige und zuverlässige Ballenpresse ermöglicht.

Bevorzugt umfasst die Schweißeinrichtung ein Schweißelement. Die Schweißeinrichtung ist aus einer Schweißstellung bewegbar gegenüber dem Presskanal angeordnet. In der Schweißstellung liegt das Schweißelement an mindestens einem der mindestens zwei zu verschweißenden Bereiche des Bindematerials an. Aus der Schweißstellung, in der die Schweißeinrichtung die mindestens zwei Bereiche des Bindematerials verschweißt, wird die Schweißeinrichtung nach Fertigstellung der Verbindung herausbewegt. Die Bewegbarkeit der Schweißeinrichtung ermöglicht eine einfache Führung des bandförmigen Bindematerials. Das Bindematerial kann zur Umhüllung des Ballens zügig um diesen herum geführt werden. Nach der Erzeugung der stoffschlüssigen Verbindung kann das verschweißte Bindematerial einfach von der Schweißeinrichtung getrennt werden. Die vereinfachte Handhabbarkeit führt zu einer Verkürzung des Bindezyklus und damit zu einer Erhöhung der Leistungsfähigkeit der Ballenpresse.

Besonders bevorzugt ist die Kühlungseinrichtung so ausgestaltet, dass sie mindestens einen Bereich des zu verschweißenden Bindematerials kühlt, der in der Schweißstellung der Schweißeinrichtung am Schweißelement anliegt. Dadurch wird sichergestellt, dass die Kühlung der stoffschlüssigen Verbindung des zu verschweißenden Bindematerials auf effektive Weise erfolgt. Die Verbindung kann so besonders schnell Aushärten, wodurch die Dauer eines Bindezyklus verkürzt und die Leistungsfähigkeit der Ballenpresse verbessert werden.

In einer vorteilhaften Ausgestaltung der Erfindung umfasst die Schweißeinrichtung ein in der Schweißstellung an mindestens einem der mindestens zwei zu verschweißenden Bereiche des Bindematerials anliegende Schweißklemmeneinrichtung. Die mindestens zwei zu verschweißenden Bereiche des Bindematerials werden in der Schweißstellung zwischen der Schweißklemmeinrichtung und einem Schwenkelement geklemmt, welches an mindestens einem der mindestens zwei zu verschweißenden Bereiche des Bindematerials anliegt. Das Klemmen vermindert eine unbeabsichtigte Relativbewegung zwischen den mindestens zwei zu verschweißenden Bereichen des Bindematerials im Bereich der Schweißeinrichtung. Die zu verschweißenden Bereiche werden so ausgerichtet, dass eine große Überlappung insbesondere in einer Richtung quer zu einer Längsrichtung des Bindematerialquerschnitts gewährleistet ist. Hierdurch wird sichergestellt, dass die Fläche der Verbindungsstelle möglichst groß ist. Hierdurch wird eine hohe Festigkeit der stoffschlüssigen Verbindung erzielt, die höhere Dichten der Ballen und eine zuverlässigere Verbindung ermöglicht. Dies führt zu einer zuverlässigeren und leistungsfähigeren Ballenpresse.

Vorzugsweise ist die Schweißeinrichtung um eine Schweißeinrichtungsschwenkachse schwenkbar und dadurch aus der Schweißstellung bewegbar angeordnet. Die Schweißeinrichtungsschwenkachse ist im Wesentlichen ortsfest gegenüber dem Presskanal und zu einer Längsmittelachse des Presskanals im Wesentlichen parallel angeordnet. Die Bewegung um eine Schweißeinrichtungsschwenkachse ermöglicht eine zügige Bewegung der Schweißeinrichtung sowie ein zuverlässiges Erfassen des Bindematerials. Dies ermöglicht eine Reduzierung des für einen Bindezyklus benötigten Zeitintervalls. Weiterhin ist durch diese Anordnung der Schweißeinrichtung ihre Bewegbarkeit auf einfache Weise steuerbar und die Schweißeinrichtung einfach lagerbar. Zudem wird der Bauteilverschleiß durch diese Bewegung der Schweißeinrichtung reduziert. Hierdurch wird die Zuverlässigkeit und Leistungsfähigkeit der Ballenpresse erhöht.

Bevorzugt ist die Schweißeinrichtung als Reibschweißeinrichtung ausgestaltet, welche zwei Bereiche des Bindematerials durch Reibschweißen verschweißt. Die Reibschweißeinrichtung ermöglicht einen gezielten und zügigen Energieeintrag in die Schweißstelle. Hierdurch kann die für den Schweißvorgang benötigte Zeit und damit die Dauer des Bindezyklus reduziert werden. Es können mehr Ballen pro Zeit gepresst und gebunden werden. Weiterhin reduziert der gezielte Energieeintrag des Reibschweißens die thermische Belastung benachbarter Bauteile, was zu einem geringen Verschleiß der Bindeeinrichtung führt. Somit wird die Verfügbarkeit und die Leistungsfähigkeit der Ballenpresse erhöht.

Besonders bevorzugt umfasst die Reibschweißeinrichtung einen das Schweißelement antreibenden Druckluftmotor. Durch diese Art des Antriebs ist die Reibschweißeinrichtung besonders zuverlässig, da ein Druckluftmotor im Vergleich zu anderen verwendbaren Motortypen besonders einfach aufgebaut ist und das Arbeitsfluid frei in der Umgebung verfügbar ist. Damit gehen eine Reduzierung der Ausfallzeiten der Ballenpresse und damit eine Steigerung ihrer Leistungsfähigkeit einher.

In vorteilhafter Ausgestaltung der Erfindung ist die Kühlungseinrichtung als Luftkühlungseinrichtung ausgestaltet, die einen Luftstrom auf die stoffschlüssige Verbindung richtet. Durch diese Ausgestaltung der Kühlungseinrichtung funktioniert sie kontaktlos und mit einem frei in der Umgebung verfügbaren Kühlmedium. Das Anströmen der stoffschlüssigen Verbindung mit einem Luftstrom ermöglicht durch die Konvektion eine zügige und zuverlässige Abführung der Wärme. Die Zeit bis zum Aushärten der stoffschlüssigen Verbindung wird somit verkürzt und die Leistungsfähigkeit der Ballenpresse gesteigert. Die Wechselwirkungen mit den benachbarten Komponenten der Schweißeinrichtung sind minimal, ebenso wie der Wartungsaufwand für die Kühlungseinrichtung. Das führt zu einer höheren Verfügbarkeit und damit Leistungsfähigkeit der Ballenpresse.

Vorzugsweise umfasst die Luftkühlungseinrichtung mindestens eine auf die stoffschlüssige Verbindung gerichtete Düse. Dadurch kann die zur Kühlung verwendete Luft effizient an genau den Bereich des bandförmigen Bindematerials gebracht werden, in dem die Kühlung erwünscht ist und die die Wärme abführende Luft hat nur eine kurze Verweilzeit im Bereich der stoffschlüssigen Verbindung und wird effizient zur Kühlung genutzt. Die Zeit bis zum Aushärten der stoffschlüssigen Verbindung wird somit verkürzt und die Leistungsfähigkeit der Ballenpresse gesteigert. Die Leistungsaufnahme der Kühlungseinrichtung ist auf ein Mindestmaß reduziert, wodurch die Leistungsfähigkeit der gesamten Ballenpresse erhöht werden kann.

Bevorzugt umfasst die Luftkühlungseinrichtung mindestens zwei auf die stoffschlüssige Verbindung der mindestens zwei zu verschweißenden Bereiche des Bindematerials gerichtete Düsen. Die erste Düse ist dabei auf eine Schmalseite der Querschnittsfläche des stoffschlüssig verbundenen bandförmigen Bindematerials gerichtet. Eine weitere Düse ist auf die gegenüberliegende Schmalseite der Querschnittsfläche des stoffschlüssig verbundenen bandförmigen Bindematerials gerichtet. Durch die Mehrzahl an Düsen, welche auf gegenüberliegende Bereiche des stoffschlüssig verbundenen bandförmigen Bindematerials gerichtet sind, kann die Leistungsfähigkeit der Kühlung erhöht und damit ihre Kühlungsdauer reduziert werden. Die kühlende Luft wird an mindestens zwei an die stoffschlüssige Verbindung grenzende Oberflächen des Bindematerials geleitet, wovon die Kühlung der Verbindung ausgeht. Folge der Minimierung der nötigen Dauer der Kühlung als Teil des Bindezyklus ist eine Steigerung der Leistungsfähigkeit der Ballenpresse.

In vorteilhafter Ausgestaltung der Erfindung umfasst die Luftkühlungseinrichtung ein Zuführelement, das Druckluft zuführt. Dadurch ist eine verlustarme und zuverlässige Zuleitung der Luft zu den Düsen möglich, was dafür sorgt, dass die für die Bereitstellung der Druckluft an den Düsen benötigte Leistung minimal ist. Dadurch steigt wiederum die Leistungsfähigkeit der Ballenpresse.

Vorzugsweise umfasst die Luftkühlungseinrichtung eine Regelvorrichtung, die die Druckluftzufuhr zum Druckluftmotor und zur Luftkühlungseinrichtung regelt. Durch diese Regelvorrichtung kann die Druckluft weitgehend verlustfrei und mit hoher zeitlicher Präzision zunächst zum Druckluftmotor, der die Reibschweißeinrichtung antreibt, und daraufhin zum Zuführelement geleitet werden. Die Regelvorrichtung ermöglicht somit die Verwendung von nur einer Druckluftquelle.

Besonders bevorzugt umfasst die Regelvorrichtung ein Umschaltventil, welches die Luftzufuhr zwischen dem Druckluftmotor und der Luftkühlungseinrichtung umschalten kann. Durch die Verwendung dieses Umschaltventils kann die zeitliche Abfolge des Schweißens und des Kühlens optimal geregelt werden. Die Kühlung setzt präzise in dem Moment ein, in dem der Leistungseintrag durch die Schweißvorrichtung endet. Die Schweißeinrichtung bleibt dabei in der Schweißstellung geschlossen. Ein Zeitverlust bis zum Einsetzten der Luftkühlung wird vermieden. Die Zykluszeit des Bindezyklus kann reduziert werden. Dadurch ist die Leistungsfähigkeit der Ballenpresse gesteigert.

In vorteilhafter Ausgestaltung der Erfindung umfasst die Regelvorrichtung einen Sensor, der eine Maschinenposition erfasst und die Umschaltung des Umschaltventils auslöst. Die zu messende Maschinenposition bezieht sich dabei auf die relative Position eines oder mehrerer Elemente der Ballenpresse. Die Maschinenposition kann dabei an unterschiedlichen Stellen der Ballenpresse gemessen werden. Ein solcher Sensor, der das Umschalten des Umschaltventils abhängig von der Maschinenposition durch einen elektrischen Impuls auslöst, ermöglicht, den Zeitpunkt der Umschaltung des Druckluftstroms zu optimieren. Der ist insofern entscheidend, als dass davon sowohl die Dauer des Schweißens als auch die Dauer der Kühlung im Bindezyklus abhängt. Durch die Möglichkeit einer exakten Steuerung des Umschaltventils können beide Mindestdauern exakt eingehalten werden, wodurch die Einrechnung weiterer Toleranzzeiten unnötig wird. Das führt zu einer Reduzierung der Dauer für einen Bindezyklus, und damit zu einer Erhöhung der Leistungsfähigkeit der Ballenpresse.

In einer vorteilhaften Ausgestaltung der Erfindung ist das Schwenkelement, welches zusammen mit der Schweißklemmeinrichtung zeitweilig die zwei zu verschweißenden Bereiche des Bindematerials klemmt, im Bereich des Stoffschlusserzeugers zwischen Bindematerial und Presskanal einbringbar. Außerdem ist es um eine Schwenkachse schwenkbar gelagert. Die Schwenkachse ist dabei zur Bodenebene im Wesentlichen orthogonal. Dadurch, dass das Schwenkelement aus dem Bereich zwischen Bindematerial und Presskanal bewegbar ist, wird die Handhabbarkeit des den Ballen umschlingenden Bindematerials vereinfacht. Durch ein Zurückweichen des Schwenkelements aus diesem Bereich muss das Bindematerial nicht aktiv in eine Richtung quer zu seiner Längserstreckung bewegt werden, um es von der Bindeeinrichtung zu lösen und den fertigen Ballen aus der Ballenpresse auszuschieben. Durch das Verschwenken des Schwenkelements kann ein fertig gebundener Ballen schnell freigegeben werden, wodurch der Bindezyklus verkürzt und die Leistungsfähigkeit der Ballenpresse gesteigert werden kann. Durch den einfachen Aufbau des schwenkbaren Schwenkelements als Teil der Bindeeinrichtung wird zudem die Zuverlässigkeit der Ballenpresse erhöht.

Bevorzugt weist die Bindeeinrichtung mindestens ein Gegenschwenkelement auf, das benachbart zum Schwenkelement angeordnet ist. Das Gegenschwenkelement hat eine vom Presskanal abgewandte Oberfläche, die im Wesentlichen in der gleichen Ebene wie eine entsprechende Oberfläche des Schwenkelementes liegt. Die Gegenschwenkachse, um die das Gegenschwenkelement schwenkbar ist, ist parallel zur Schwenkachse positioniert. Durch dieses Gegenschwenkelement wird die Belastung, die durch das Bindematerial auf das zwischen Bindematerial und Presskanal eingebrachte Schwenkelement wirkt, verkleinert, da ein Teil dieser Belastung vom Gegenschwenkelement abgefangen wird. Diese Teilung der Belastung führt zu einer größeren zu erwartenden Lebensdauer des Schwenkelementes. Desgleichen wird der beanspruchte Bauraum optimiert. Durch die Verwendung eines Schwenkelementes und eines Gegenschwenkelementes statt nur eines entsprechend größeren Schwenkelementes ist außerdem das resultierende Massenträgheitsmoment, das den Energiebedarf zum Schwenken mitbestimmt, reduziert. Die Verwendung des Gegenschwenkelements führt zu einer höheren Zuverlässigkeit der beschriebenen Bauteile und einem geringen Leistungsbedarf der Bindeeinrichtung.

Besonders bevorzugt weisen sowohl das Schwenkelement als auch das Gegenschwenkelement einen Teilzahnkreis auf, der wiederum eine Verzahnung aufweist. Die Verzahnung eines Schwenkelementes steht dabei mit der Verzahnung eines Gegenschwenkelementes in Eingriff. Die Teilkreise verlaufen teilweise um die Schwenkachse des entsprechenden Elements, das sie umfasst. Durch die im Eingriff stehenden Verzahnungen wird eine Schwenkbewegung des Schwenkelementes unmittelbar und ohne weitere Bauteile auf das Gegenschwenkelement übertragen, welches dadurch zuverlässig eine äquivalente Schwenkbewegung ausführt. Die Beschränkung der Anzahl der Bauteile führt außerdem zu einer Beschränkung des Risikos eines Ausfalls der Bindeeinrichtung und macht die Ballenpresse damit zuverlässiger.

In einer vorteilhaften Ausgestaltung der Erfindung beträgt der Schwenkwinkel des Schwenkelementes weniger als 90°. Durch einen solchen kleinen Schwenkwinkel sind ein schnelles Einbringen und eine einfache Form der Führung des Schwenkelements in den Bereich zwischen Bindematerial und Presskanal möglich. Durch das schnelle Einbringen kann der Bindezyklus verkürzt und damit die Leistungsfähigkeit der Presse erhöht werden.

Vorzugsweise weist die Bindeeinrichtung eine vordere Klemmvorrichtung und eine hintere Klemmvorrichtung auf. Die vordere Klemmvorrichtung ist dabei zwischen dem innerhalb des Presskanals angeordneten und entlang dessen Längsmittelachse bewegbaren Presskolben und dem Stoffschlusserzeuger angeordnet. Die hintere Klemmvorrichtung ist auf der vom Presskolben abgewandten Seite des Stoffschlusserzeugers angeordnet. Dadurch, dass der Stoffschlusserzeuger zwischen zwei separaten Klemmvorrichtungen angeordnet ist, kann in einem Bindezyklus das erste zu klemmende Bindematerialende, welches während des Pressens eines ersten Ballens von der vorderen Klemmvorrichtung geklemmt ist, freigegeben und von der hinteren Klemmvorrichtung geklemmt und in Position gehalten werden. Dadurch wird ein Führen des zweiten zu verschweißenden Bindematerialendes aus Richtung des Presskolbens zwischen das Schweißelement und das Schwenkelement ermöglicht, ohne dass dabei ein Bauteil außer dem Schwenkelement und dem Gegenschwenkelement zwischen dem Bindematerial und dem Presskanal liegt. Voraussetzung dafür ist die Öffnung der vorderen Klemmvorrichtung, die ansonsten die Führung des zweiten Bindematerialendes zum Stoffschlusserzeuger blockieren würde. Die vordere Klemmvorrichtung ist in der Folge wiederum nötig, um das erste Bindematerialende zur Umschlingung des folgenden zu pressenden Ballens zu klemmen, wovon ein Teil sich mit wachsendem Ballen in den Bereich der Stoffschlusseinrichtung verlagert.

Das erste Bindematerialende zur Umschlingung des folgenden zu pressenden Ballens schließt sich vor einer Trennung der Bindematerialabschnitte an das zweite Bindematerialende des ersten zu pressenden Ballen an. Durch die Verwendung zweier Klemmvorrichtungen, die in Umschlingungsrichtung vor und hinter dem Stoffschlusserzeuger angeordnet sind, ist die Bewegung einer das Bindematerial klemmenden Klemmvorrichtung nicht nötig und die nötigen Bewegungen der Klemmvorrichtungen sind auf ein Mindestmaß beschränkt. Die Bewegungen können daher besonders schnell erfolgen und die Zykluszeit eines Bindezyklus verringert werden. Die Leistungsfähigkeit der Ballenpresse ist damit erhöht. Zudem gibt es wenige durch Relativbewegungen verschleißbehaftete Bauteile und eine erhöhte Zuverlässigkeit der Ballenpresse.

In vorteilhafter Ausgestaltung der Erfindung umfasst die vordere Klemmvorrichtung die Schneidvorrichtung. Die Schneidvorrichtung trennt während eines Bindezyklus das bandförmige Bindematerial, wodurch zum einen ein zweites Bindematerialende für den ersten zu pressenden Ballen und zum anderen ein erstes Bindematerialende für den folgenden zu pressenden Ballen entsteht. Als Teil der vorderen Klemmvorrichtung kann die Schneidvorrichtung besonders einfach ausgestaltet werden und die Anzahl der einzeln anzusteuernden Vorrichtungen wird reduziert. Durch diese Verwendung nur einer entsprechenden Mindestzahl von Bauteilen für die Schneidvorrichtung wird eine erhöhte Zuverlässigkeit der Bindeeinrichtung und damit der Ballenpresse erreicht.

Vorzugsweise weist die vordere Klemmvorrichtung einen Schneidarm und den Klemmarm auf. Hierdurch kann das Klemmen und das Schneiden des Bindematerials nacheinander stattfinden. Somit kann sichergestellt werden, dass das Bindematerial zuverlässig eingeklemmt ist, bevor es geschnitten wird.

Bevorzugt ist der Klemmarm relativ zu dem Schneidarm verschieblich angeordnet. Der Klemmarm klemmt das Bindematerial beim Schließen der vorderen Klemmvorrichtung ein und ist dadurch festgelegt. Durch den verschieblich angeordneten Schneidarm kann ein Schneiden des Bindematerials erfolgen, nachdem der Klemmarm festgelegt ist. Hierdurch kann ein Schneiden des Bindematerials bei festgelegtem Bindematerial ermöglicht werden, wodurch die Zuverlässigkeit der Ballenpresse erhöht wird.

Besonders bevorzugt ist der Klemmarm an dem Schneidarm beim Übergang der vorderen Klemmvorrichtung in die Klemmstellung voreilend angeordnet. Durch das Voreilen wird sichergestellt, dass der Klemmarm das Bindematerial klemmt, bevor dieses in einem angrenzenden Bereich vom Schneidarm durchtrennt werden kann. Dies erhöht die Zuverlässigkeit der Ballenpresse, da ein Schneiden des Bindematerials bei geklemmtem Bindematerial zuverlässiger funktioniert.

Besonders bevorzugt ist zwischen dem Klemmarm und dem Schneidarm ein eine Kraft vom Schneidarm auf den Klemmarm übertragendes Federelement angeordnet. Hierdurch ist es möglich, Schneidarm und Klemmarm gemeinsam anzutreiben. Die Konstruktion ist bei dieser Ausgestaltung der vorderen Klemmvorrichtung vereinfacht und ermöglicht es, sicherzustellen, dass das Klemmen des Bindematerials jederzeit zuverlässig erfolgt. Dies erhöht die Zuverlässigkeit der Ballenpresse.

Bevorzugt ist am Schneidarm eine gezahnte Klinge angeordnet. Die Verwendung einer gezahnten Klinge erleichtert aufgrund der nacheinander das Bindematerial kontaktierenden Bereiche der Schneide das Durchtrennen des Bindematerials und reduziert den dazu nötigen Kraftaufwand. Die Gefahr von Ausfällen der Ballenpressen wegen nicht ordnungsgemäß durchtrenntem Bindematerial wird reduziert. Dies steigert die Leistungsfähigkeit der Ballenpresse.

Vorteilhafterweise ist an der vorderen Klemmvorrichtung ein Niederhalter schwenkbar angeordnet. Wenn die vordere Klemmvorrichtung das geklemmte Ende des Bindematerials freigibt, um einem weiteren Abschnitt des Bindematerials, das dem Stoffschlusserzeuger zugeführt wird, auszuweichen, kann ein schwenk-bar angeordneter Niederhalter das freigegebene Ende des Bindematerials in Richtung des Presskanals bewegen und in dieser Position halten. Hierdurch wird sichergestellt, dass die Abschnitte des Bindematerials, die in dem Stoffschlusserzeuger überlappen sollen, im Bereich des Stoffschlusserzeugers optimal positioniert sind. Ein Wegbewegen des Bindematerials, das zuvor in der vorderen Klemmvorrichtung geklemmt war, aufgrund einer Verformung des Bindematerial wird durch den Niederhalter vermieden. Der dem Stoffschlusserzeuger zugeführte zweite Bindematerialabschnitt kann somit auch mit hoher Geschwindigkeit über den zuvor in der vorderen Klemmvorrichtung festgeklemmten Abschnitt des Bindematerials hinweggeführt werden. Hierdurch kann die Zykluszeit eines Bindezyklus verringert und die Leistungsfähigkeit der Ballenpresse erhöht werden. Zudem wird durch die Sicherstellung der Bindematerialpositionierung die Zuverlässigkeit der stoffschlüssigen Verbindung erhöht.

Besonders bevorzugt ist der Niederhalter um eine Niederhalterschwenkachse schwenkbar, die gegenüber einer zur Längsmittelachse des Presskanals senkrechten Ebene durch einen Anschlagpunkt des Niederhalters eine Neigung zwischen 20 und 40° aufweist. Der um eine gegenüber einer senkrechten Ebene durch einen Anschlagspunkt des Niederhalters gekippten Niederhalterschwenkachse schwenkbare Niederhalter kann das zuvor in der vorderen Klemmvorrichtung geklemmte Ende des Bindematerials in Richtung des Presskanals bewegen und dabei gleichzeitig in einem gewissen Umfang straffen, bevor er das Bindematerial in dieser niederen Position hält. Vor allem jedoch kann ein Niederhalter, der um die beschriebene Niederhalterschwenkachse schwenkbar ist, leichter aus dem verbundenen und einen Ballen umhüllenden Bindematerial entfernt werden. Wenn das Bindematerial im Stoffschlusserzeuger miteinander verbunden wird, ergibt sich eine durchgehende Umhüllung des Ballens. Der Niederhalter ist in diesem Moment zwischen dem Bindematerial und dem Ballen befindlich. Für das Ausschieben des Ballens aus dem Presskanal muss folglich der Niederhalter aus dem Bereich zwischen Ballen und Bindematerial entfernt werden. Durch die geneigte Niederhalterschwenkachse ist dies besonders einfach möglich. Hierdurch wird die Zuverlässigkeit der Ballenpresse erhöht.

Bevorzugt weist die hintere Klemmvorrichtung ein Klemmelement mit Fangzähnen auf. Das Klemmelement steht in Klemmposition in Kontakt mit dem Bindematerial. Die Fangzähne am Klemmelement umgreifen das Bindematerial zu beiden Seiten und zentrieren dieses bezüglich des Klemmelementes. Dies ermöglicht eine verbesserte Ausrichtung des Bindematerials in dem benachbarten Stoffschlusserzeuger. Somit wird sichergestellt, dass die in dem Stoffschlusserzeuger stoffschlüssig zu verbindenden Abschnitte des Bindematerials mit einer größtmöglichen Fläche aneinander anliegen. Die stoffschlüssige Verbindung erhält zuverlässig eine großflächige Ausprägung, wodurch die Haltbarkeit und Belastbarkeit der Verbindungsstelle erhöht wird. Dies ermöglicht hohe Zugfestigkeiten und damit mögliche Pressdichten der zu umschlingenden Ballen und somit eine erhöhte Leistungsfähigkeit der Ballenpresse.

Vorzugsweise ist der hinteren Klemmvorrichtung das Gegenschwenkelement zugeordnet, wobei das Gegenschwenkelement die Fangzähne in einer Klemmposition aufnehmende Aussparungen aufweist. Die das Bindematerial in einer Klemmposition gegenüber dem Klemmelement zentrierenden Fangzähne können in die Aussparungen des Gegenschwenkelementes eintauchen. Hierdurch wird die Zentrierwirkung der Fangzähne verbessert und gleichzeitig ein sicheres Klemmen sichergestellt. Die Zuverlässigkeit der Ausrichtung des Bindematerials in einem Stoffschlusserzeuger mit den oben genannten Vorteilen für die Festigkeit der Verbindung sowie die Leistungsfähigkeit der Ballenpresse wird verbessert.

Vorteilhafterweise ist die vordere Klemmvorrichtung in der Klemmstellung ortsfest und lagefixiert an der Ballenpresse abgestützt. Der vorderen Klemmvorrichtung ist eine Umlenkeinrichtung zugeordnet, um die der Endbereich des bandförmigen Bindematerials in der Klemmstellung der vorderen Klemmvorrichtung U-, C- oder L-förmig geführt ist. Hierdurch wird ein Bewegen der vorderen Klemmvorrichtung, während sie in der Klemmstellung einen Endbereich des bandförmigen Bindematerials klemmt, unnötig. Dadurch kann die vordere Klemmvorrichtung ortsfest gegenüber dem Presskanal abgestützt sein. Die vordere Klemmvorrichtung kann somit einfacher und damit zuverlässiger ausgestaltet werden, wodurch die Zuverlässigkeit der Ballenpresse erhöht ist.

Besonders bevorzugt ist die vordere Klemmvorrichtung das Bindematerial zumindest zu Beginn des Bindezyklus zwischen 140 und 200°, vorzugsweise zwischen 170 und 180°, umlenkend ausgestaltet. Der in der vorderen Klemmvorrichtung geklemmte Bereich des Bindematerials erfährt um die vordere Klemmvorrichtung herum eine Umlenkung, sodass sich ein anschließender Bereich des Bindematerials in die entgegengesetzte Richtung erstreckt. Dadurch wird vermieden, dass die vordere Klemmvorrichtung in der Klemmstellung gedreht werden muss, um eine Parallelität der genannten Bereiche des Bindematerials zu ermöglichen. Hierdurch kann die vordere Klemmvorrichtung besonders einfach konstruiert werden. Durch das ortsfeste Klemmen eines zur Längsmittelachse im Wesentlichen parallelen Bindematerialabschnittes ist die vordere Klemmvorrichtung mit robusten Bauteilen gegenüber dem Presskanal abstützbar. Zudem wird durch die Reibung des Bindematerials an der Umlenkeinrichtung die Haltekraft der vorderen Klemmvorrichtung vergrößert. Dies führt zu einer zuverlässigeren Ballenpresse.

Bevorzugt sind die Umlenkeinrichtung und der in Klemmstellung der vorderen Klemmvorrichtung am bandförmigen Bindematerial anliegende und von der vorderen Klemmvorrichtung umfasste Gegenhalter einteilig ausgestaltet. Durch die einteilige Ausgestaltung von Umlenkeinrichtung und Gegenhalter, auf den die vordere Klemmvorrichtung das Bindematerial in der Klemmstellung klemmt, kann die Anzahl der Bauteile der vorderen Klemmvorrichtung reduziert werden. Die vordere Klemmvorrichtung ist dadurch mechanisch weiter vereinfacht und dadurch prinzipiell weniger fehleranfällig. Die Zuverlässigkeit der Ballenpresse wird somit erhöht.

Vorteilhafterweise ist die vordere Klemmeinrichtung die Enden des bandförmigen Bindematerials in zwei aufeinanderfolgenden Bindezyklen nacheinander klemmend ausgestaltet. Dies bedeutet, dass die vordere Klemmvorrichtung zu Beginn jedes Bindezyklus das Ende des bandförmigen Bindematerials klemmt. Es ist somit nur eine vordere Klemmvorrichtung notwendig, die zu Beginn jedes Bindezyklus das Ende des bandförmigen Bindematerials festklemmt. Auf weitere vordere Klemmvorrichtungen kann verzichtet werden. Dies vereinfacht den mechanischen Aufbau der Ballenpresse und erhöht somit die Zuverlässigkeit der Ballenpresse.

In einer vorteilhaften Ausgestaltung umfasst die Bindeeinrichtung mindestens ein an einer von dem Presskanal abgewandten Seite des bandförmigen Bindematerials am Bindematerial anliegendes und gegenüber dem Presskanal ortsfest angeordnetes Bandführungselement. Das Bandführungselement ist in Richtung der Längsmittelachse des Presskanals vom Stoffschlusserzeuger beabstandet. Das Bandführungselement weist die Position des am Bandführungselement anliegenden Abschnitts des Bindematerials in einer Querrichtung, welche parallel zur Längsseite des Bandmaterialquerschnitts ist, begrenzende Führungsabsätze auf. Das Bandführungselement führt das Bindematerial und richtet es aus. Hierdurch kann sichergestellt werden, dass das Bindematerial im Bereich des Stoffschlusserzeugers besser und zuverlässiger ausgerichtet ist. Hierdurch wird eine zuverlässige Führung und Fixierung des Bindematerials im Stoffschlusserzeuger sichergestellt. Dies führt zu einer zuverlässigen Verbindung des Bindematerials im Stoffschlusserzeuger. Die Zuverlässigkeit und Leistungsfähigkeit der Ballenpresse ist damit erhöht.

Vorzugsweise weist das Bandführungselement zu dem den Ballen pressenden Presskolben einen größeren Abstand auf als der Stoffschlusserzeuger zu dem Presskolben. Damit liegt das Bandführungselement auf der Seite des Stoffschlusserzeugers, in dessen Richtung sich das den Ballen umschlingende Bindematerial zwischen zwei Bindezyklen nach und nach weiter erstreckt. Dadurch liegt das Bindematerial vor einem Bindezyklus zuverlässig am Bandführungselement an, wodurch die Zuverlässigkeit der Funktion des Stoffschlusserzeugers und damit der Bindeeinrichtung besonders hoch ist.

Vorteilhafterweise ist das Bandführungselement derart einstellbar, dass der Winkel des zwischen dem Stoffschlusserzeuger und dem Bandführungselement im Wesentlichen geradlinig verlaufenden Bindematerials und der Längsmittelachse des Presskanals veränderbar ist. Hierdurch kann die Ausrichtung des Bindematerials zwischen dem Stoffschlusserzeuger und dem Schwenkelement optimiert werden. Denkbar ist auch, dass bei Verwendung unterschiedlicher Bindematerialien unterschiedliche Einstellungen des Bandführungselementes vorzuziehen sind. Durch die Veränderbarkeit des Bandführungselements kann die Ballenpresse somit auf veränderte Rahmenbedingungen eingestellt und so ein zuverlässiger und leistungsfähiger Betrieb der Ballenpresse sichergestellt werden.

Vorzugsweise umfasst eine Bandführungseinrichtung eine Mehrzahl von Bandführungselementen sowie ein Führungsträgerelement, an das die Bandführungselemente angeordnet sind. Das Zusammenfassen von mehreren Bandführungselementen in einem Führungsträgerelement vereinfacht den Aufbau der Bandführungseinrichtung und führt somit zu einer zuverlässigen Ballenpresse.

Weitere Einzelheiten und Vorteile der Erfindung sind den folgend beschriebenen, schematisch dargestellten Ausführungsbeispielen zu entnehmen. Es zeigen:
- Fig. 1: eine Übersichtsdarstellung eines Ausführungsbeispiels einer erfindungsgemäßen Ballenpresse für landwirtschaftliches Erntegut;
- Fig. 2: eine Übersichtsdarstellung eines Ausführungsbeispiels einer Nadelschwinge sowie eines Antriebselements, des Antriebshebels und der Koppeleinrichtung;
- Fig. 3: eine Seitenansicht der Nadelschwinge gemäß Fig. 2 in Ausgangsstellung an der Ballenpresse;
- Fig. 4: eine Seitenansicht der Nadelschwinge gemäß Fig. 2 zwischen Ausgangsstellung und oberem Totpunkt an der Ballenpresse;
- Fig. 5: eine Seitenansicht der Nadelschwinge gemäß Fig. 2 im oberen Totpunkt an der Ballenpresse;
- Fig. 6: ein Schwenkwinkel-zu-Drehwinkel-Diagramm zur Nadelschwingenbewegung;
- Fig. 7: eine Übersichtsdarstellung eines Ausführungsbeispiels eines Bindetisches mit Bindenadeln der Nadelschwinge gemäß Fig. 2 im oberen Totpunkt;
- Fig. 8: eine Übersichtsdarstellung des Bindetisches zwischen zwei Bindezyklen;
- Fig. 9: eine Übersichtsdarstellung der Ballenpresse nach Fig. 1 mit Abrolleinrichtung;
- Fig. 10: eine Übersichtsdarstellung der Abrolleinrichtung nach Fig. 9 und einer Regeleinrichtung;
- Fig. 11: eine Übersichtsdarstellung der Regeleinrichtung nach Fig. 10;
- Fig. 12: eine Übersichtsdarstellung eines Ausführungsbeispiels eines Bandspeichers;
- Fig. 13: eine schematische Darstellung der Schritte eines Verlaufes eines Bindezyklus mit Veranschaulichung der Stellung der Teile einer Bindeeinrichtung auf einem Bindetisch und zwar beginnend mit Fig. 13a und endend mit Fig. 13i, jeweils in der Ausgangsstellung;
- Fig. 14: eine Übersichtsdarstellung eines Ausführungsbeispiels eines Schwenkelementes inklusive einem Schwenkelementantrieb;
- Fig. 15: eine Übersichtsdarstellung eines Ausführungsbeispiels eines Stoffschlusserzeugers inklusive einem Stoffschlusserzeugerantrieb;
- Fig. 16: eine Übersichtsdarstellung des geöffneten Stoffschlusserzeugers nach Fig. 15;
- Fig. 17: eine Übersichtsdarstellung des geschlossenen Stoffschlusserzeugers nach Fig. 15;
- Fig. 18: eine Übersichtsdarstellung eines Ausführungsbeispiels einer vorderen Klemmvorrichtung inklusive einem ersten Klemmvorrichtungsantrieb;
- Fig. 19: eine Übersichtsdarstellung der geöffneten vorderen Klemmvorrichtung nach Fig. 18;
- Fig. 20: eine Übersichtsdarstellung der geschlossenen vorderen Klemmvorrichtung nach Fig. 18;
- Fig. 21: eine Übersichtsdarstellung der vorderen Klemmvorrichtung nach Fig. 18 mit einem ausweichenden Gegenhalter;
- Fig. 22: eine Übersichtsdarstellung eines Ausführungsbeispiels einer hinteren Klemmvorrichtung inklusive einem zweiten Klemmvorrichtungsantrieb;
- Fig. 23: eine Übersichtsdarstellung der hinteren Klemmvorrichtung nach Fig. 22 mit einem Gegenschwenkelement;
- Fig. 24a: eine Übersichtsdarstellung eines Ausführungsbeispiels einer Kühleinrichtung;
- Fig. 24b: einen schematischen Schaltplan der Kühleinrichtung;
- Fig. 25: eine Übersichtsdarstellung mehrerer Bandführungselemente an einem Führungsträgerelement;

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1.

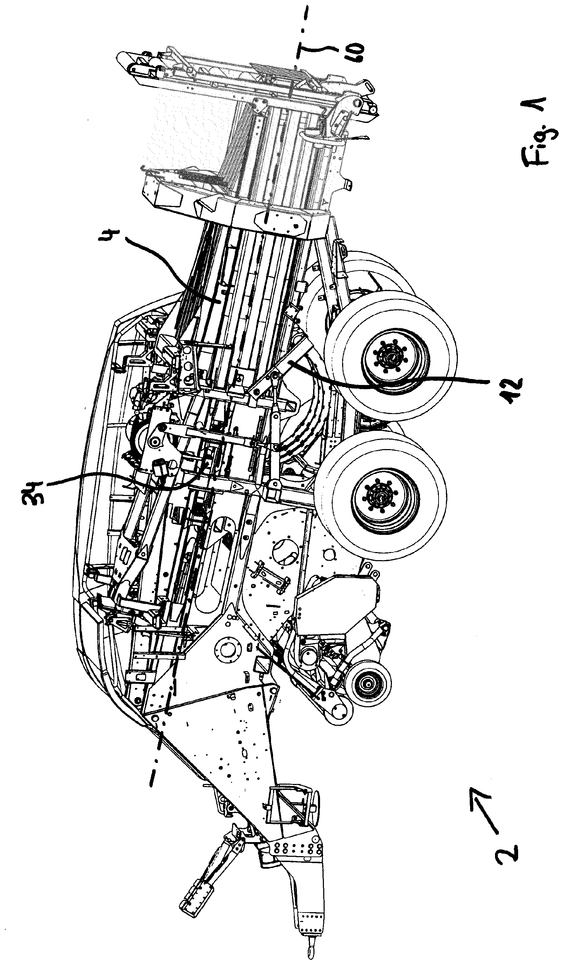

Fig. 1 zeigt eine erfindungsgemäße Ballenpresse 2 für landwirtschaftliches Erntegut. Die Ballenpresse 2 wird im Betrieb an eine landwirtschaftliche Zugmaschine angehängt und presst während der Fahrt mit einem Presskolben 34 kontinuierlich Ballen, die innerhalb eines Presskanals 4 von einem Umschlingungsmittel umhüllt werden und schließlich den Presskanal 4 durch eine vom Presskolben 34 abgewandte Öffnung verlassen. Der Presskanal 4 hat einen rechteckigen Querschnitt, durch dessen Zentrum eine Längsmittelachse des Presskanals 60 verläuft.

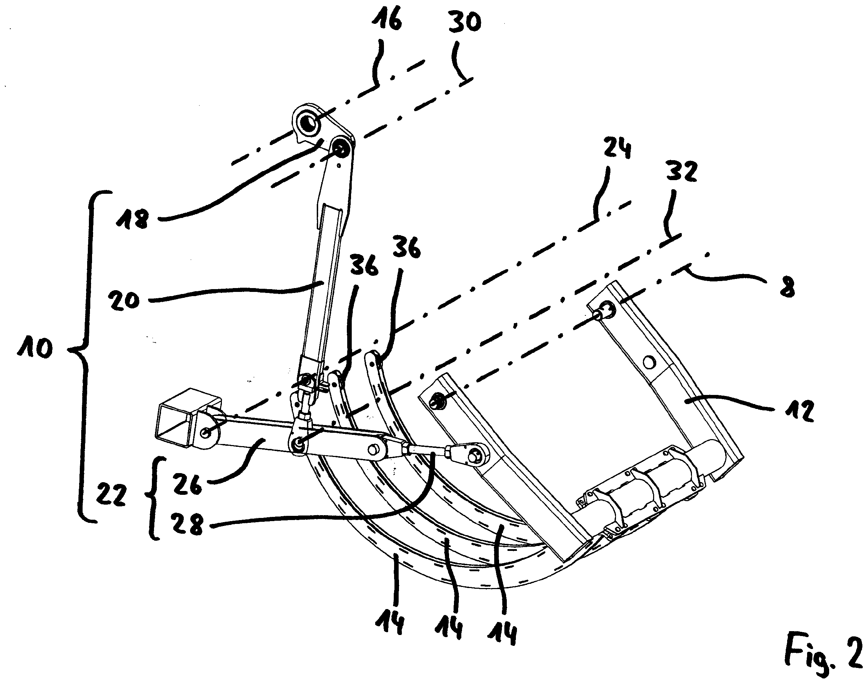

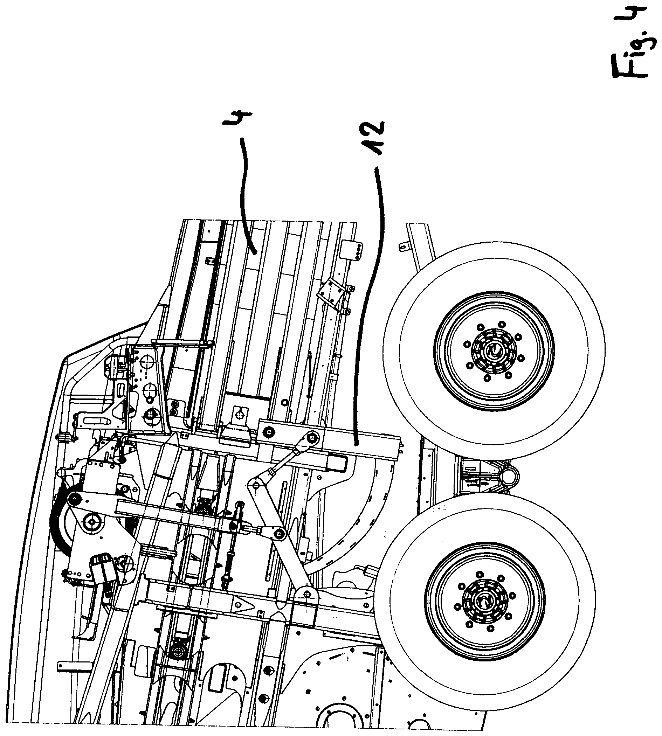

Eine von der Ballenpresse 2 umfasste Nadelschwinge 12 ist in den Fig. 2 bis 5 in unterschiedlichen Positionen dargestellt. Die Nadelschwinge 12 mit Bindenadeln 14 ist schwenkbar um eine Schwingenschwenkachse 8 gelagert. Die Schwingenschwenkachse 8 ist ortsfest gegenüber dem Presskanal 4. Angetrieben wird die Nadelschwinge 12 von einer Antriebsanordnung 10. Die Antriebsanordnung 10 umfasst ein Antriebselement 18, das um eine gegenüber dem Presskanal 4 ortsfeste Antriebsdrehachse 16 drehbar gelagert ist. An dem Antriebselement 18 ist ein Antriebshebel 20 drehbar um eine Antriebshebeldrehachse 30 gelagert.

Der Antriebshebel 20 ist mit der Nadelschwinge 12 über eine Koppeleinrichtung 22 verbunden. Die Koppeleinrichtung 22 umfasst einen ersten Koppelhebel 26 und einen weiteren Koppelhebel 28. Der erste Koppelhebel 26 ist um eine Koppelschwenkachse 24 schwenkbar angeordnet, wobei die Koppelschwenkachse 24 ortsfest gegenüber dem Presskanal 4 ist. Der weitere Koppelhebel 28 ist zum einen wiederum schwenkbar am ersten Koppelhebel 26 angeordnet und zum anderen schwenkbar und von der Schwingenschwenkachse 8 beabstandet an der Nadelschwinge 12 angeordnet. Der Antriebshebel 20 ist dabei schwenkbar um eine Antriebskoppelschwenkachse 32 am ersten Koppelhebel 26 festgelegt.

Die Schwingenschwenkachse 8 liegt in einer Schwingenschwenkachsenebene, zu welcher die Längsmittelachse des Presskanals 60 orthogonal ist. Die Antriebsdrehachse 16, die Antriebshebeldrehachse 30, die Koppelschwenkachse 24 und die Antriebskoppelschwenkachse 32 sind dabei parallel zur Schwingenschwenkachse 8 positioniert.

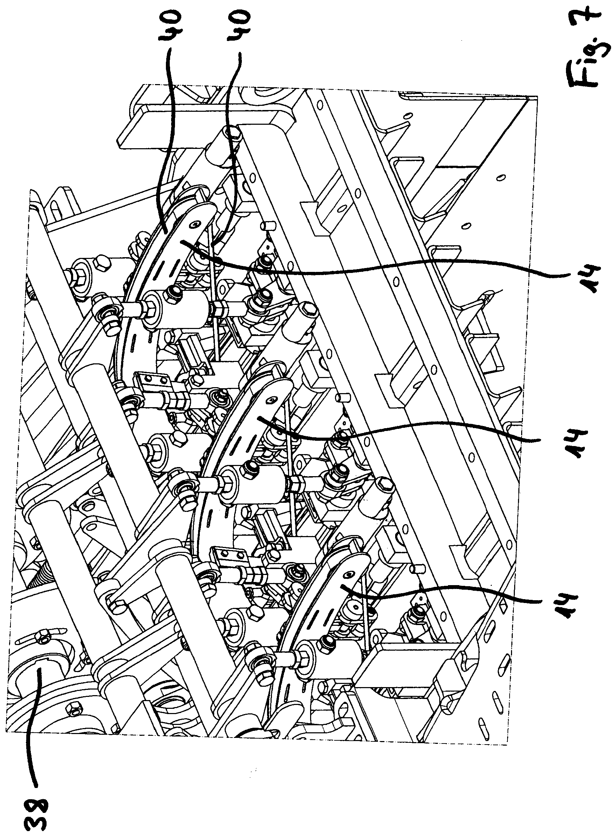

Das Antriebselement 18 ist angeordnet an einer Steuerwelle 38 (vgl. Fig. 7). Diese Steuerwelle 38 steuert mit einer Umdrehung einen Bindezyklus. Während eines Bindezyklus werden zwei Enden eines den gepressten Ballen umhüllenden Umschlingungsmittels miteinander verbunden. Teil des Bindezyklus ist die Führung des Umschlingungsmittels durch den Presskanal 4 anhand der Bindenadeln 14. Die Nadelschwinge 12 weist in Fig. 2 drei Bindenadeln 14 auf. Diese umfassen jeweils eine Führungsrolle 36.

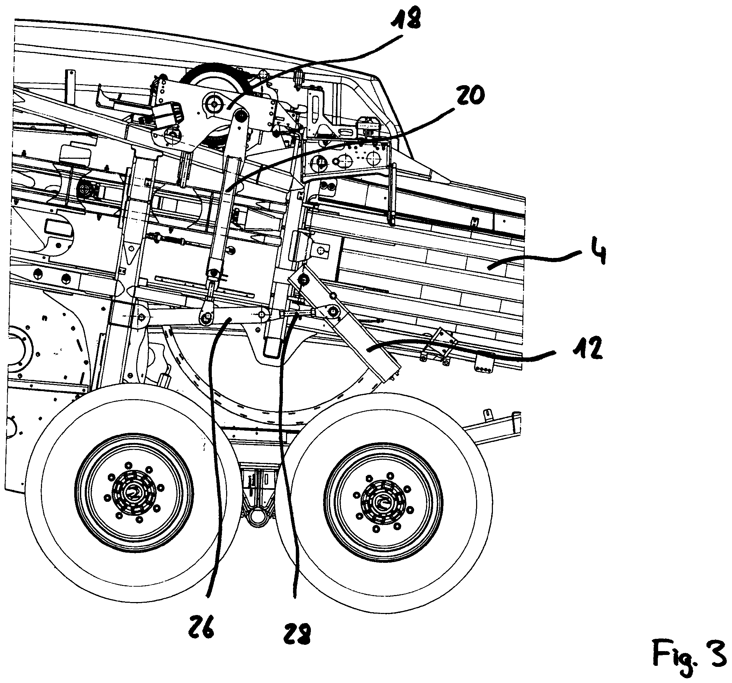

Die Fig. 3 bis 5 zeigen die Nadelschwinge 12 in drei unterschiedlichen Stellungen. In Fig. 3 befindet sich die Nadelschwinge 12 in einer Ausgangsstellung. Dabei liegen die Bindenadeln 14 vollumfänglich außerhalb des Presskanals 4. In dieser Ausgangsstellung befindet sich die Nadelschwinge 12 vor und nach einem jeden Bindezyklus. Kennzeichnend dabei ist, dass die Koppelschwenkachse 24 und der an der Nadelschwinge 12 angeordnete Bereich der Koppeleinrichtung 22 einen maximal möglichen Abstand voneinander haben, d. h., dass die Koppeleinrichtung 22 gestreckt ist. Gleichzeitig liegen die Antriebsdrehachse 16, die Antriebshebeldrehachse 30 und die Koppelschwenkachse 24 nicht in einer Ebene. Antriebselement 18 und Antriebshebel 20 sind als Einheit betrachtet nicht gestreckt.

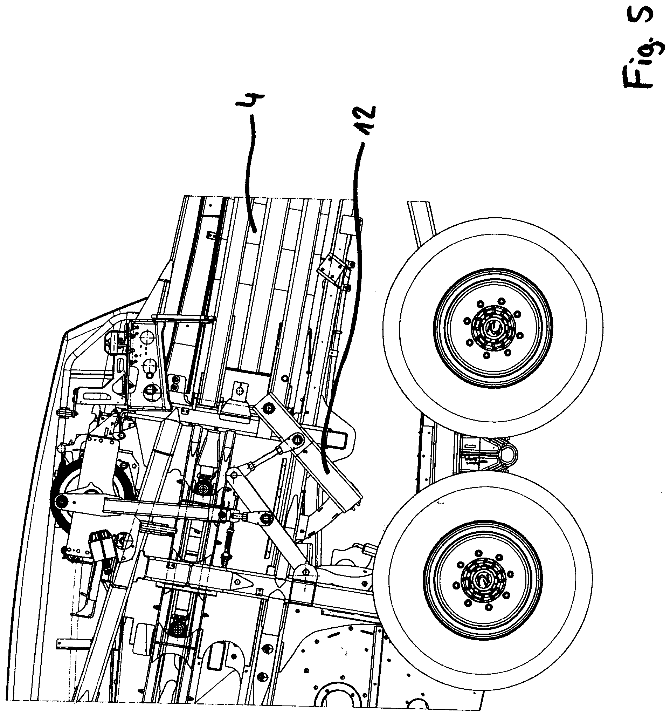

Während eines Bindezyklus wird die Nadelschwinge 12 bei konstanter Winkelgeschwindigkeit des Antriebselementes 18 schneller von der Ausgangsstellung in den oberen Totpunkt der Nadelschwinge 12 (vgl. Fig. 5) geschwenkt, als wenn Antriebselement 18 und Antriebshebel 20 als Einheit in der Ausgangsstellung gestreckt wären.

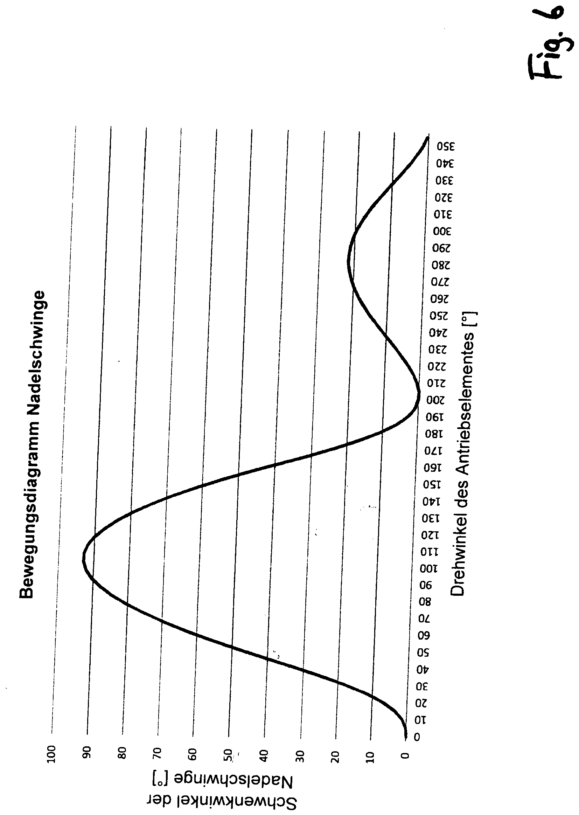

Folge davon ist, dass bei der Rückkehr der Nadelschwinge 12 in die Ausgangsstellung die Koppeleinrichtung 22, nachdem sie bei einem Drehwinkel des Antriebselementes 18 von weniger als 360° bereits gestreckt wurde, erneut zu einem geringeren Maße verkürzt wird. Dabei werden die Bindenadeln 14 nach Abschluss des Bindezyklus erneut zu einem Teil in den Presskanal 4 geführt, bevor die Ausgangsstellung der Nadelschwinge 12 wieder hergestellt ist. Dieser Bewegungsablauf der Nadelschwinge 12 wird durch das Bewegungsdiagramm in Fig. 6 dargestellt. Dabei ist sowohl der Schwenkwinkel der Nadelschwinge 12 als auch der Drehwinkel des Antriebschenkels 18 in der Ausgangsstellung gleich Null.

Fig. 7 zeigt einen Bindetisch der Ballenpresse 2 oberhalb des Presskanals 4. Außerdem sind Teile der drei Bindenadeln 14 dargestellt, die ein bandförmiges Bindematerial 40 führen, während sich die Nadelschwinge 12 im oberen Totpunkt befindet

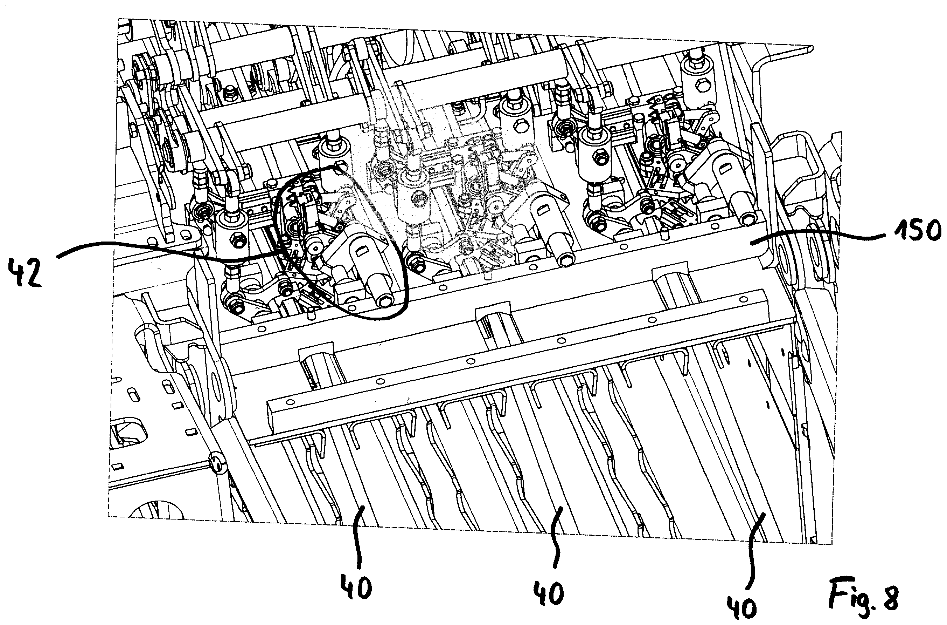

Fig. 8 zeigt eine weitere perspektivische Übersichtsdarstellung des Bindetisches mit drei Stoffschlusserzeugern 42 und den stoffschlüssig zu verbindenden bandförmigem Bindematerial 40. In dieser Darstellung befindet sich die nicht sichtbare Nadelschwinge 12 in der Ausgangsstellung und der Ballen wird durch den Presskolben 34 gepresst. Es ist ein Teil der Bindeeinrichtungen, welcher auf dem Bindetisch angeordnet ist, zwischen zwei Bindezyklen dargestellt.

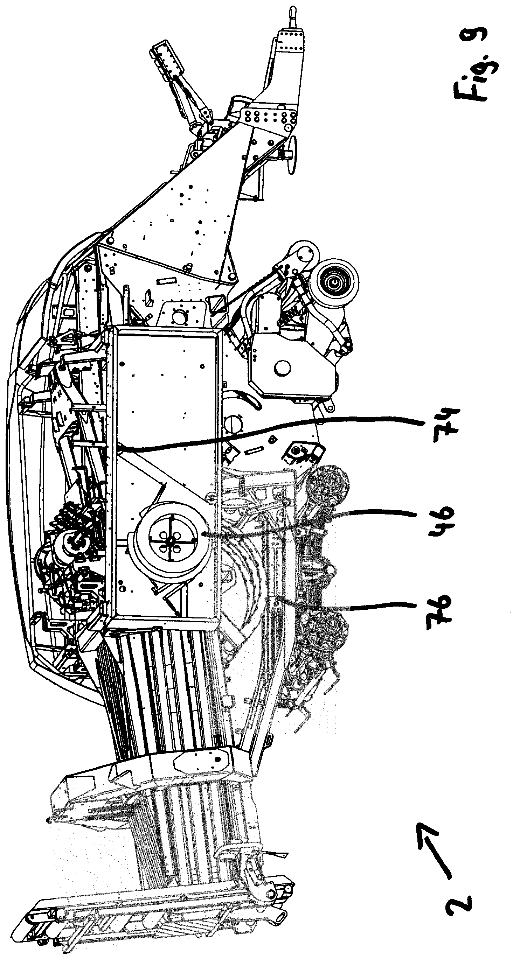

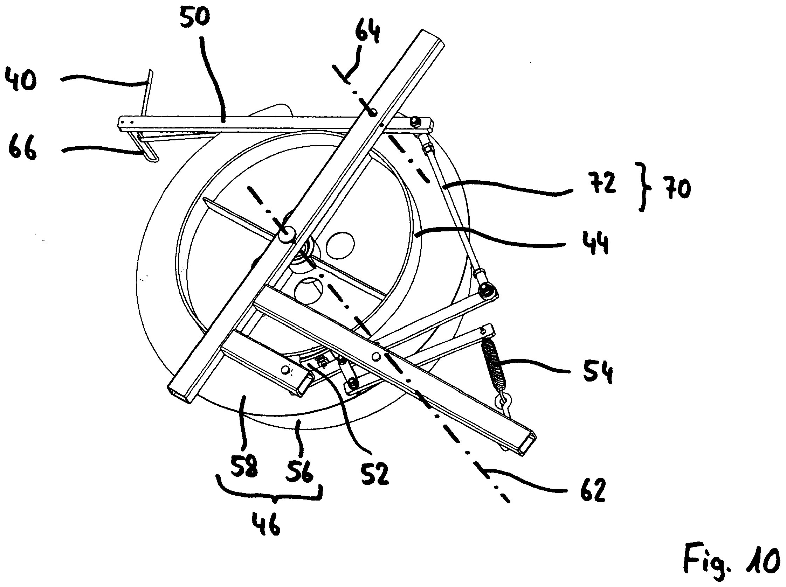

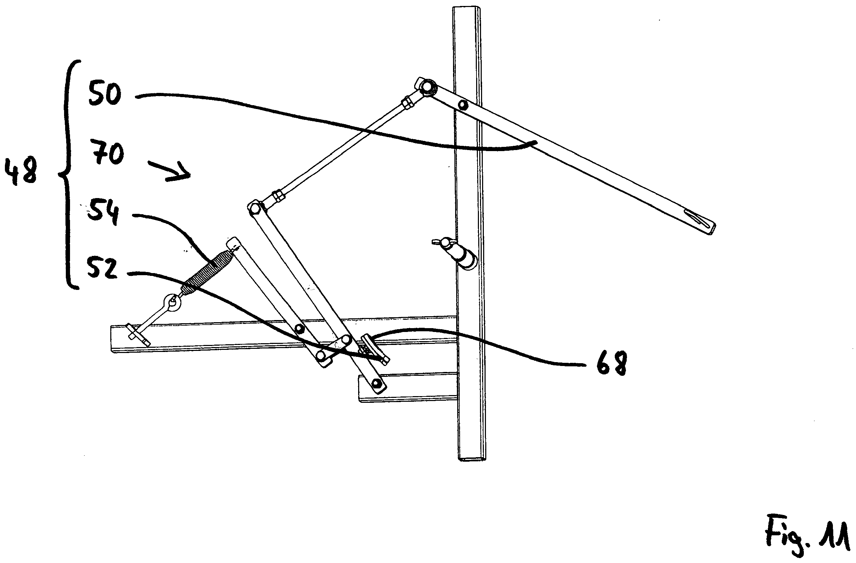

Fig. 9 ist eine Übersichtsdarstellung der erfindungsgemäßen Ballenpresse 2 und zeigt bezüglich der Fig. 1, 3, 4 und 5 ihre gegenüberliegende Seite. An dieser Seite angeordnet ist eine Abrolleinrichtung 46, die ein bandförmiges Bindematerial 40 zur Umhüllung der Ballen bevorratet. Weiterhin sind Teile einer Regeleinrichtung 48 dargestellt, die in den folgenden Fig. 10 und 11 detailliert dargestellt sind. Fig. 10 zeigt gegenüber Fig. 9 die Rückseite der Abrolleinrichtung 46 und der Regeleinrichtung 48. Die Abrolleinrichtung 46 weist eine wechselbare Bandrolle 56 und einen Bandrollenträger 58 auf. Die Abrolleinrichtung 46 ist um eine Abrolldrehachse, welche ortsfest gegenüber dem Presskanal 4 angeordnet ist, drehbar.

Die Abrolleinrichtung 46 weist eine Bremskontaktfläche 44 auf, die die Form einer Kreiszylindermantelfläche hat. In einer Bremsstellung, in der die Regeleinrichtung 48 in Fig. 10 dargestellt ist, liegt an der Bremskontaktfläche 44 ein Bremselement 52 mit einer Bremselementfläche 68 an, welches Teil der Regeleinrichtung 48 ist. Über eine Übertragungsvorrichtung 70 ist das Bremselement 52 mit einem Regelelement 50 verbunden. An dem Regelelement 50 ist ein Führungselement 66 angeordnet, das als Öse ausgebildet ist.

Durch dieses Führungselement 66 verläuft das bandförmige Bindematerial 40, nachdem es von der Abrolleinrichtung 46 abgerollt wurde. Eine Erhöhung der Bandspannung verursacht dabei ein Schwenken des Regelelementes 50 um eine Regelelementschwenkachse 64, die parallel zur Abrolldrehachse 62 positioniert ist. Diese Schwenkbewegung, die von der Übertragungsvorrichtung 70 untersetzt auf das Bremselement 52 übertragen wird, führt zu einem Lösen des Bremselementes 52 mit der Bremselementfläche 68 von der Bremskontaktfläche 44. Durch ein Bremsrückstellelement 54 wird die Übertragungsvorrichtung 70 mit einer entgegen dieser Bewegung wirkenden Kraft beaufschlagt. Bei Nachlassen der Bandspannung bewirkt das Bremsrückstellelement 54 eine Rückführung der Regeleinrichtung 48 in die Bremsstellung.

Zur Einstellung der Sensibilität der Regeleinrichtung 48 ist an das Regelelement 50 ein Steuerhebel 72 angeordnet, der längenverstellbar ist. Fig. 9 zeigt über die Abrolleinrichtung 46 und die Regeleinrichtung 48 hinaus ein Umlenkelement 74, das einen Teil des bandförmigen Bindematerials 40 nach Durchlaufen des Führungselementes 66 umlenkt.

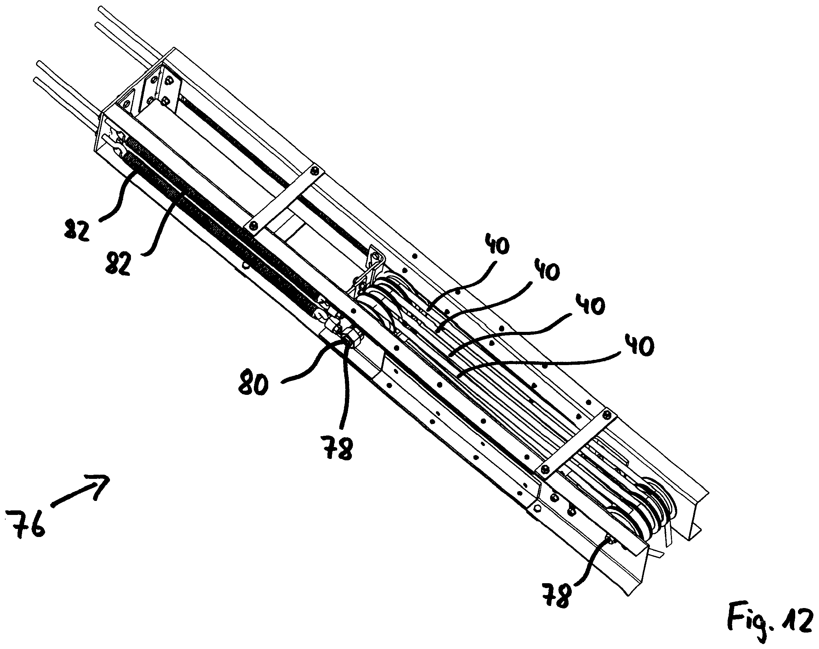

Fig. 9 zeigt unterhalb des Presskanals 4 einen Bandspeicher 76, dem das bandförmige Bindematerial 40, nachdem es von der Abrolleinrichtung 46 abgerollt wurde, zugeführt wird. Dieser Bandspeicher 76 ist in Fig. 12 im Detail dargestellt.

Der Bandspeicher 76 hat zwei Bandspeicherachskörper 78. Auf dem Freiachskörper sind vier, auf dem weiteren Bandspeicherachskörper fünf Rollen angeordnet. Das Bindematerial 40, welches sich zwischen Abrolleinrichtung 46 und Stoffschlusserzeuger 42 befindet, umwickelt die Rollen der Bandspeicherachskörper 78 nach Art eines Flaschenzuges. Dabei umschlingt das bandförmige Bindematerial 40 abwechselnd und jeweils halbseitig den Umfang der Rollen der unterschiedlichen Bandspeicherachskörper 78. Einer der Bandspeicherachskörper 78 ist ein beweglich gelagerter Freiachskörper 80. Dieser wird durch ein Bandspeicherrückstellelement 82 mit einer Kraft beaufschlagt, die eine den Abstand der beiden Bandspeicherachskörper 78 voneinander vergrößernde Bewegung bewirkt. Durch die Vergrößerung des Abstandes vergrößert sich die von Bandspeicher 76 gespeicherte Länge des bandförmigen Bindematerials 40 um ein Vielfaches der Differenz der Abstände der Bandspeicherachskörper 78 vor und nach der Abstandsvergrößerung.

Haben die Bandspeicherrückstellelemente 82 den Abstand der beiden Bandspeicherachskörper 78 allmählich zwischen zwei Bindezyklen erhöht, stellt der Bandspeicher 76 die Menge an bandförmigem Bindematerial 40 bereit, die für eine Bewegung der zugeordneten Bindenadeln 14 an der Nadelschwinge 12 von ihrer Ausgangsstellung bis in den oberen Totpunkt zum Führen des Bindematerials an den Bindetisch erforderlich ist. Gleichzeitig verhindert der Bandspeicher 76 große Beschleunigungen der Abrolleinrichtung 46, da durch die Bandspeicherrückstellelemente 82 das bandförmige Bindematerial 40 nur mit einer moderaten Bandspannung, welche die Regeleinrichtung 48 bewegt, allmählich von der Abrolleinrichtung 46 abgerollt wird.

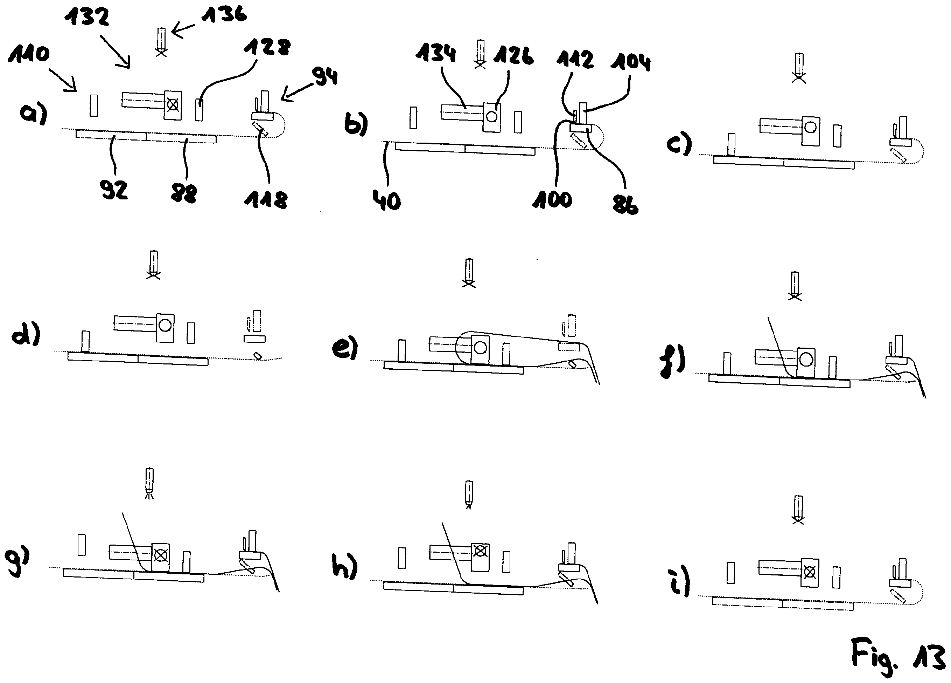

Fig. 13 zeigt eine Serie von Prinzipdarstellungen, die den Ablauf eines Bindezyklus und die Funktion der auf dem Bindetisch angeordneten Komponenten verdeutlicht. Dargestellt sind jeweils eine vordere Klemmvorrichtung 94, eine Schneidvorrichtung 100, ein Gegenhalter 86, ein Niederhalter 118, ein Schwenkelement 88 und ein Gegenschwenkelement 92, eine hintere Klemmvorrichtung 110, eine Reibschweißeinrichtung 132 mit einer Schweißklemmeinrichtung 128 sowie eine Düse 136 der Kühlungseinrichtung.

In den neun Figurteilen 13a bis 13i dargestellt werden jeweils die genannten Komponenten einer Bindeeinrichtung auf dem Bindetisch. Dabei befindet sich gemäß der Darstellungen der Presskolben 34 der Ballenpresse 2 rechts von den dargestellten Komponenten und die Öffnung des Presskanals 4, durch die die gepressten Ballen diesen verlassen, links davon. Ein erstes Ende des bandförmigen Bindematerials 40 ist mit einer gestrichelten Linie, ein weiterer Teil davon mit einer durchgezogenen Linie dargestellt.

Fig. 13a zeigt eine Ausgangsposition der Bindeeinrichtung, in der das bandförmige Bindematerial 40 von der vorderen Klemmvorrichtung 94 geklemmt ist. In dieser Ausgangsposition umschlingt das bandförmige Bindematerial 40 den Gegenhalter 86 U-förmig und erstreckt sich im weiteren Verlauf in Richtung der hinteren oberen Querkante des gepressten Ballens. In dieser Position befinden sich die weiteren dargestellten Komponenten in vom bandförmigen Bindematerial 40 beabstandeten Positionen.

Fig. 13b zeigt, dass das Schwenkelement 88 und das Gegenschwenkelement 92 zu Beginn des Bindezyklus in die dargestellte Bandebene verschwenkt werden. Zuvor (vgl. Fig. 13a) befanden sie sich außerhalb einer Bandebene, in der die Bindeeinrichtung für diese Darstellungen geschnitten ist. Gleichzeitig mit dem Verschwenken des Schwenkelementes 88 und des Gegenschwenkeklementes 92 wird die Reibschweißeinrichtung 132 aktiviert. Dazu wird die Luftzufuhr zu einem die Reibschweißeinrichtung 132 antreibenden Druckluftmotor 134 aktiviert.

Fig. 13c zeigt in einem folgenden Schritt die hintere Klemmvorrichtung 110 abgesenkt und dass sie das bandförmige Bindematerial 40 auf dem Gegenschwenkelement 92 einklemmt. Das ermöglicht, dass sich die vordere Klemmvorrichtung 94 in einem folgenden Schritt (vgl. Fig. 13d) öffnen kann, ohne dass die Festlegung des den Ballen umschlingenden Teils des bandförmigen Bindematerials 40 beeinträchtigt wird. Gleichzeitig mit der Öffnung der vorderen Klemmvorrichtung 94 schwenkt ein Niederhalter 118 in die dargestellte Bandebene. Dieser stellt sicher, dass der rechts von der hinteren Klemmvorrichtung 110 liegende Bandabschnitt unterhalb der Reibschweißeinrichtung 132 angeordnet bleibt.

Fig. 13e zeigt darauf folgend einen weiteren schlaufenförmigen Bandabschnitt (als durchgezogene Linie dargestellt) desselben Bindematerials, den eine Bindenadel 14 durch den Presskanal 4 in den prinzipiell dargestellten Bereich des Bindetisches führt. Der Gegenhalter 86 weicht, ermöglicht durch die Öffnung der vorderen Klemmvorrichtung 94, dem Bindematerial zeitweilig aus und befindet sich dabei aus der dargestellten Bandebene verlagert. Während die Nadelschwinge 12 im Bereich des oberen Totpunktes liegt, schließt sich die Reibschweißeinrichtung 132 und mit ihr die Schweißklemmeinrichtung 128. Daraufhin liegt das bandförmige Bindematerial 40 zweilagig zwischen der Reibschweißeinrichtung 132 bzw. der Schweißklemmeinrichtung 128 und dem Schwenkelement 88. Sobald Kontakt zwischen beiden geklemmten Lagen und der Reibschweißeinrichtung 132 hergestellt ist, beginnt aufgrund der bereits erfolgten Aktivierung des Druckluftmotors 134, der die Reibschweißeinrichtung 132 antreibt, der Schweißvorgang.

Fig. 13f zeigt, dass der Schweißvorgang bis zu diesem nächsten Schritt andauert. Die Bindenadel 14 hat den Bereich des Bindetisches verlassen, dabei hat der Gegenhalter 86 die zuvor von der Bindenadel 14 geführte Schlaufe des Bindematerials 40 nach seiner Rückverlagerung in die Bandebene gefangen. Daraufhin wird die vordere Klemmvorrichtung 94 und damit, jedoch der Klemmenbewegung nacheilend, die Schneidvorrichtung 100 geschlossen. Somit wird die Schlaufe des bandförmigen Bindematerials 40 zwischen Reibschweißeinrichtung 132 und vorderer Klemmvorrichtung 94 getrennt. Der Teil des bandförmigen Bindematerials 40, dessen Enden unter der Schweißklemmeinrichtung 128 liegen, umhüllt den fertig gepressten Ballen. Der mit einer durchgezogenen Linie dargestellte Bandabschnitt wird während des andauernden Schweißvorgangs durch die geschlossene Schweißklemmeinrichtung 128 fixiert.

Fig. 13g zeigt die Komponenten der Bindeeinrichtung, nachdem die Reibschweißeinrichtung 132 gestoppt wurde. Sie bleibt dabei, ebenso wie die Schweißklemmeinrichtung 128, geschlossen. Die Druckluft, die zuvor dem Druckluftmotor 134 für die Reibschweißeinrichtung 132 zugeführt wurde, wird nun der Düse 136 zugeführt, die die Schweißverbindung kühlt. Geschlossen bleiben die Reibschweißeinrichtung 132 und die Schweißklemmeinrichtung 128, weil dadurch eine Relativbewegung der noch heißen verschweißten Bandabschnitte verhindert wird. Fig. 13g zeigt außerdem, dass die hintere Klemmvorrichtung 110 geöffnet wird.

Fig. 13h zeigt die gleichen Komponenten, nachdem sich die Reibschweißeinrichtung 132 und die Schweißklemmeinrichtung 128 geöffnet haben. Die Enden des den Ballen umhüllenden bandförmigen Bindematerials 40 halten aufgrund der hergestellten und gekühlten stoffschlüssigen Verbindung aneinander. Durch die Kühlung wird die zum Erkalten der Schweißstelle benötigte Zeit reduziert. Damit ist der gepresste Ballen stoffschlüssig umschlungen. Im Folgenden (vgl. Fig. 13i) werden das Schwenkelement 88 und das Gegenschwenkelement 92 aus der dargestellten Bandebene herausgeschwenkt. Dadurch liegen sie nicht mehr zwischen dem den Ballen umhüllenden bandförmigen Bindematerial 40 und dem landwirtschaftlichen Erntegut und der umhüllte Ballen kann aus dem Presskanal 4 formstabil ausgebracht werden.

Beim Schwenken des Schwenkelementes 88 und des Gegenschwenkelementes 92 wird außerdem die Luftzufuhr, welche zuletzt zu der Düse 136 geführt wurde, beendet. Der Abschnitt des bandförmigen Bindematerials 40, der nach dem Schließen der Schneidvorrichtung 100 (vgl. Fig. 13f) durch die vordere Klemmvorrichtung 94 geklemmt wird, erstreckt sich entsprechend des gestrichelt dargestellten Bandabschnitts in Fig. 13a. Dabei wird dieser Abschnitt mit wachsender Länge des zu pressenden Ballens zu einem wachsenden Winkel von dem Gegenhalter 86 umgelenkt, bis er sich bei Erreichen einer maximalen Ballenlänge U-förmig an den Gegenhalter 86 anlegt. Wird ein erneuter Bindezyklus ausgelöst, finden die dargestellten Schritte des Bindezyklus erneut wie beschrieben statt.

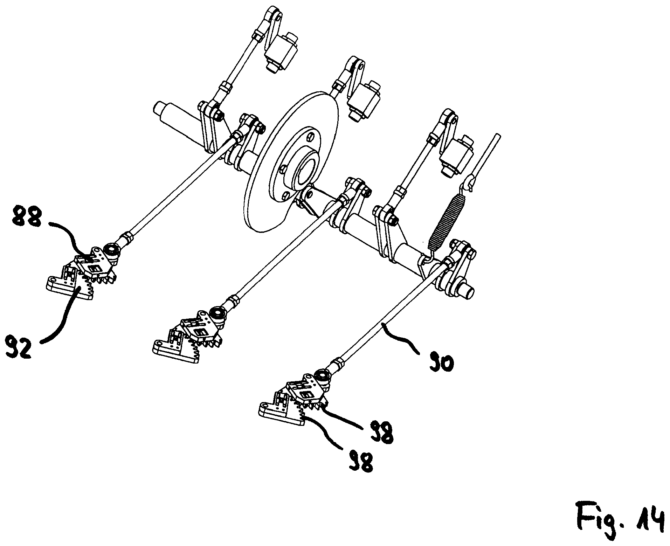

Die folgenden Fig. 14 bis 23 zeigen die in Fig. 13 symbolisch dargestellten Komponenten der Bindeeinrichtung in Übersichtsdarstellungen. Fig. 14 zeigt drei Schwenkelemente 88 und drei Gegenschwenkelemente 92. Jedes Schwenkelementpaar, bestehend aus einem Schwenkelement 88 und einem Gegenschwenkelement 92, ist dabei einer Bindeeinrichtung zugeordnet. Entsprechend der Beschreibung des Bindezyklus sind die Schwenkelementpaare zwischen bandförmigem Bindematerial 40 und den zu pressenden Ballen einbringbar und auf dem Bindetisch positioniert. Am Schwenkelement 88 ist ein Schwenkelementsteuerhebel 90 angelenkt. Das Schwenkelement 88 schwenkt um eine Schwenkachse, die in einer Schwenkachsenebene liegt, zu welcher die Längsmittelachse des Presskanals 60 orthogonal positioniert ist. Das Gegenschwenkelement 92 ist jeweils um eine parallele Schwenkachse, die in Richtung der Längsmittelachse des Presskanals von der ersten Schwenkachse beabstandet ist, schwenkbar. Übertragen wird die Schwenkbewegung vom Schwenkelement 88 auf das Gegenschwenkelement 92 durch Teilzahnkreise, die sowohl die Schwenkelemente 88 als auch die Gegenschwenkelemente 92 aufweisen. Die Teilzahnkreise 98 von Schwenkelement 88 und Gegenschwenkelement 92 befinden sich jeweils im Eingriff, so dass eine Schwenkbewegung des Schwenkelements 88 eine äquivalente Schwenkbewegung des Gegenschwenkelements 92 verursacht.

Fig. 14 zeigt außerdem eine Hebelwelle, an die der Schwenkelementsteuerhebel 90 angeordnet ist. Eine Schwenkbewegung dieser Hebelwelle wird durch eine dargestellte und auf der Steuerwelle 38 befestigte Kurvenscheibe geführt. Neben der Bewegung der Schwenkelementpaare wird durch die dargestellte Hebelwelle ein Druckluftventil 144 gesteuert, welches die Luftzufuhr zum Druckluftmotor 134 bzw. zur Düse 136 regelt. Die Hebelwelle wird durch eine Spiralfeder gegen die Kurvenscheibe zurückgestellt.

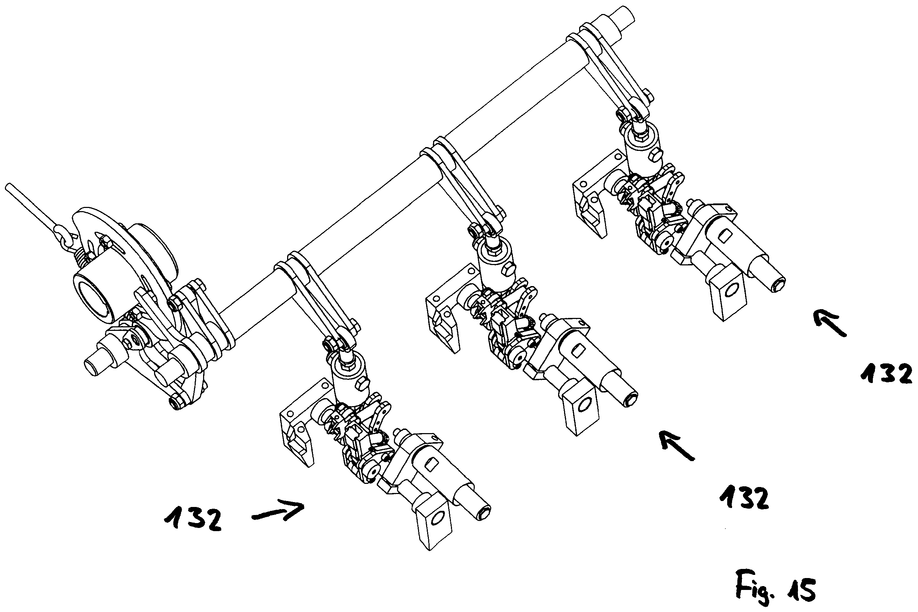

Fig. 15 zeigt drei Reibschweißeinrichtungen 132, die jeweils einer Bindeeinrichtung zugeordnet sind. Dargestellt jeweils der zugeordnete Druckluftmotor 134, ein das zu verschweißende Bindematerial während des Schweißvorgangs kontaktierendes Schweißelement 126 sowie die Schweißklemmeinrichtung 128. Diese Komponenten sind schwenkbar um eine Schweißeinrichtungsschwenkachse 130 am Bindetisch befestigt.

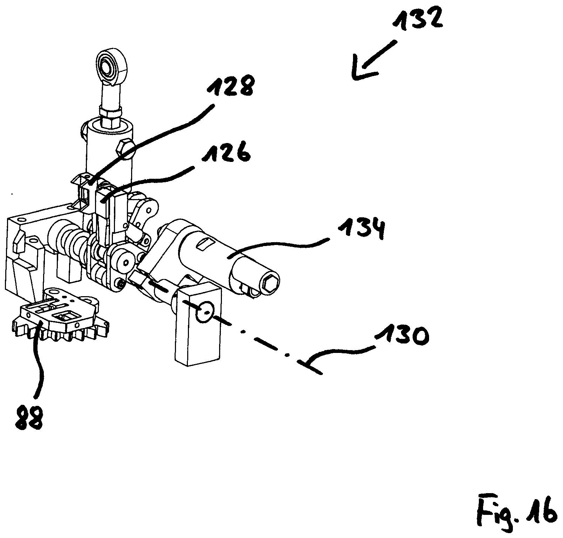

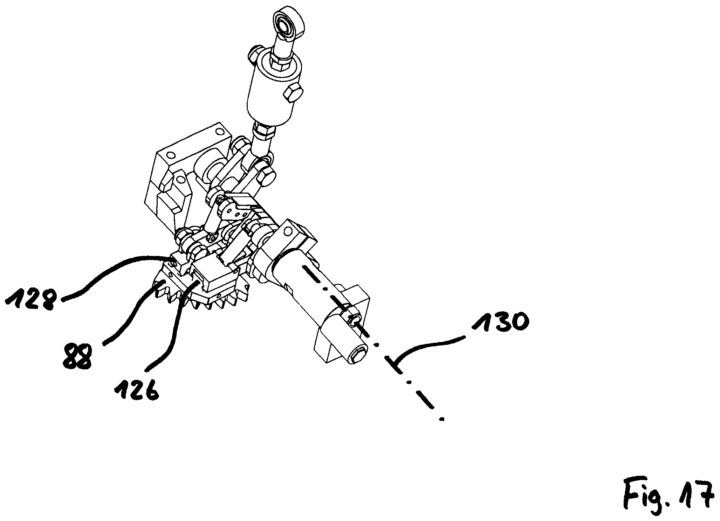

Die Fig. 16 und 17 zeigen jeweils die Reibschweißeinrichtung 132 gemeinsam mit dem Schwenkelement 88, welches zwischen bandförmigem Bindematerial 40 und Ballen geschwenkt ist. In einer geöffneten Stellung der Reibschweißeinrichtung 132 (vgl. Fig. 16) haben diese beiden Komponenten keine Wirkung aufeinander, unabhängig davon, ob der Druckluftmotor 134 aktiviert ist oder nicht. Vom Betrieb des Druckluftmotors 134 hängt ausschließlich die hochfrequente Bewegung des Schweißelements 126 ab.

Fig. 17 zeigt wiederum die Reibschweißeinrichtung 132 und das Schwenkelement 88, wobei in diesem Fall die Reibschweißeinrichtung 132 geschlossen ist. Das bandförmige Bindematerial 40, was sich in einem Bindezyklus bei dieser Position der Reibschweißeinrichtung 132 zwischen eben dieser Reibschweißeinrichtung 132 und dem Schwenkelement 88 befindet, ist nicht dargestellt.

Ausgelöst wird auch diese Schwenkbewegung der Reibschweißeinrichtung 132 von einem Hebel, der an einer Hebelwelle angeordnet ist, dessen Bewegung wiederum von einer Kurvenscheibe geführt wird (vgl. Fig. 15). Das Schweißelement 126 sowie die Schweißklemmeinrichtung 128 werden hierdurch mechanisch geführt. Um eine Überbeanspruchung dieser Bauteile beim Klemmen bzw. Schweißen zu vermeiden, sind Überlastsicherungen in Form von Federpaketen vorgesehen. Eine Überlastsicherung ist zwischen Hebelwelle und Reibschweißeinrichtung 132 angeordnet. Dem Schweißelement 126 und der Schweißklemmeinrichtung 128 sind jeweils noch zusätzlich eigene Überlastsicherungen zugeordnete. Diese dienen neben der Überlastsicherung auch zur Feineinstellung des Anpressdrucks des Schweißelements 126 und der Klemmkraft der Schweißklemmeinrichtung 128, die somit unabhängig voneinander erfolgen kann.

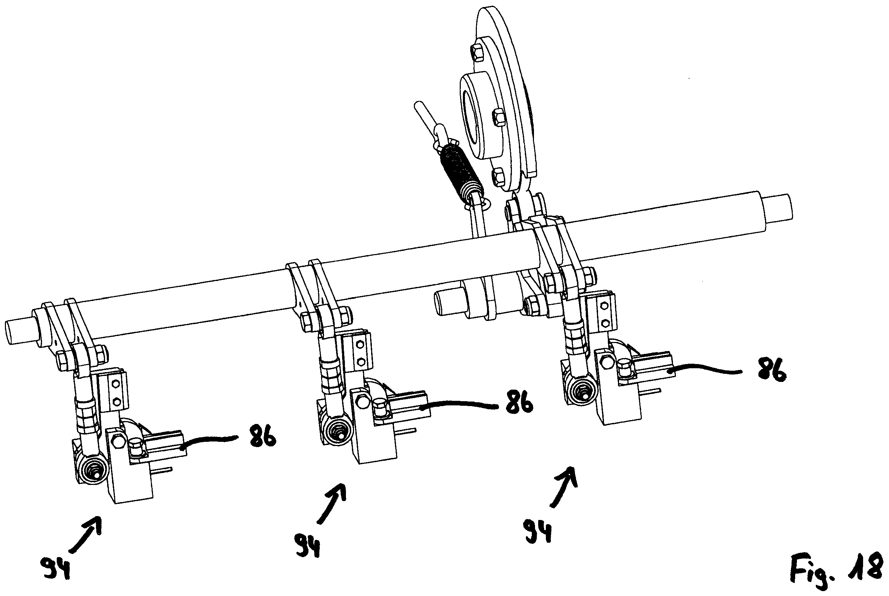

Die Fig. 18 bis 21 zeigen die vordere Klemmvorrichtung 94. Weiterhin dargestellt sind der Gegenhalter 86, der Niederhalter 118, ein Klemmarm 104 und ein Schneidarm 112. Gemäß der Beschreibung eines Bindezyklus (vgl. Fig. 13) klemmt die vordere Klemmvorrichtung 94 das bandförmige Bindematerial 40 in der Ausgangsposition der Bindeeinrichtung.

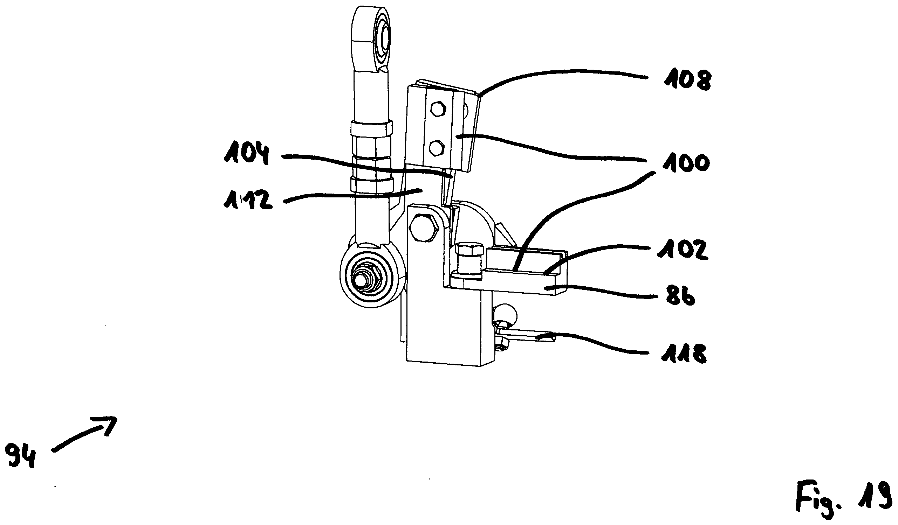

Der Gegenhalter 86 ist um eine Gegenhalterschwenkachse 96 schwenkbar gegenüber dem Bindetisch gelagert. Fig. 19 zeigt den Gegenhalter 86, welcher im oberen Bereich eine Gegenschneide 102 und einen zu einer Fixieranordnung 106 gehörenden Vorsprung 108 aufweist, in einer Gegenhalteposition. Die vordere Klemmvorrichtung 94 mit ihrem Klemmarm 104 und die Schneidvorrichtung 100 mit ihrem Schneidarm 112 sind geöffnet. Der Niederhalter 118, der um eine Niederhalterschwenkachse 120 in einem Anschlagpunkt 122 gegenüber dem Bindetisch schwenkbar in einem Anschlagpunkt gelagert ist, ist ausgeklappt.

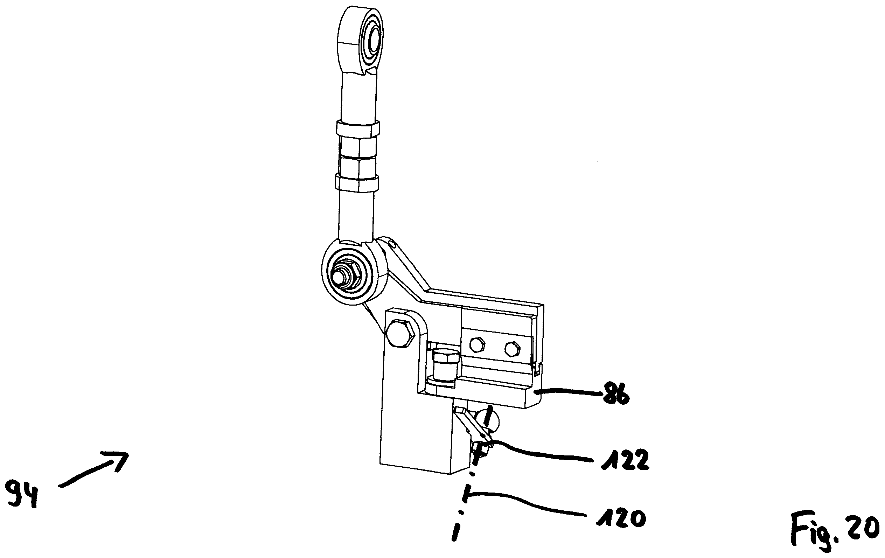

Fig. 20 zeigt den Gegenhalter 86 wiederum in der Gegenhalteposition und die vordere Klemmvorrichtung 94 in einer Klemmstellung. In dieser Klemmstellung klemmt sie das bandförmige Bindematerial 40 während sich die Bindeeinrichtung in der Ausgangsposition befindet. Dabei greift ein Vorsprung 108 des Klemmarms 104 in eine Aussparung und der beim Schließen der vorderen Klemmvorrichtung 94 nacheilende Schneidarm 112 schneidet das bandförmige Bindematerial 40 bei bestehender Klemmung durch Zusammenwirken der am Schneidarm 112 angeordneten Schneide mit einer Gegenschneide 102. Der Niederhalter 118 wird beim Schließen der vorderen Klemmvorrichtung 94 und der Schneidvorrichtung 100 eingeklappt.

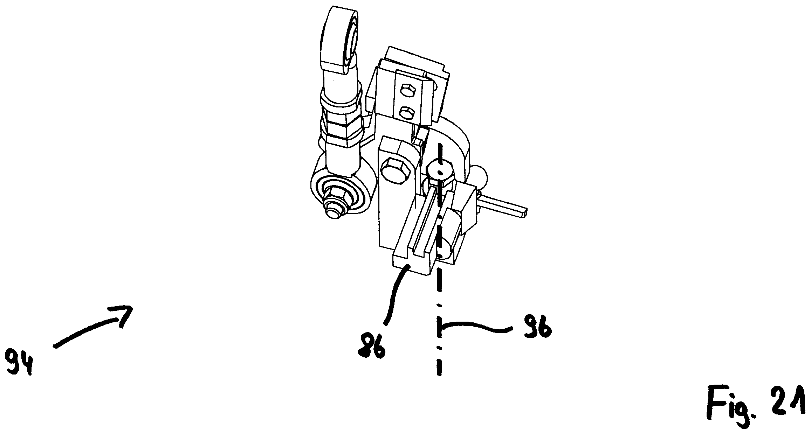

Fig. 21 zeigt den Gegenhalter 86 in einer Ausweichposition, in der er der durch die Bindenadel 14 zugeführten Schlaufe des bandförmigen Bindematerials 40 ausweicht. Ein nicht dargestelltes Federelement stellt den Gegenhalter 86 bei ausbleibender Krafteinwirkung durch das bandförmige Bindematerial 40 in die Gegenhalteposition zurück.

An der vorderen Klemmvorrichtung 94 ist ein Hebel angeordnet, welcher wiederum an einer Hebelwelle angeordnet ist, dessen Schwenkbewegung durch eine Kurvenscheibe geführt wird.

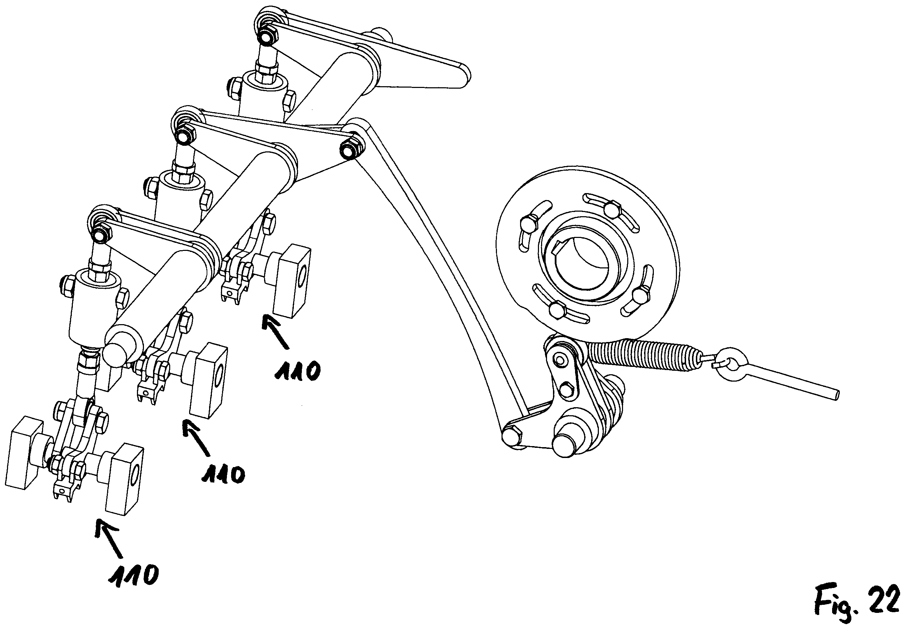

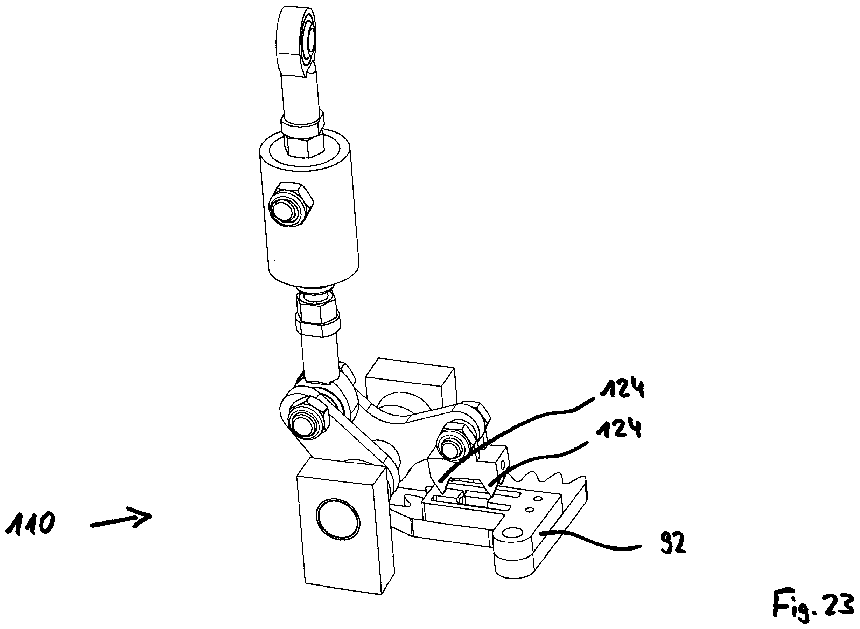

Fig. 22 und Fig. 23 zeigen die hintere Klemmvorrichtung 110. Diese befindet sich in Fahrtrichtung der Ballenpresse 2 hinter der Reibschweißeinrichtung 132 und klemmt das bandförmige Bindematerial 40 in einer Klemmposition auf dem Gegenschwenkelement 92 fest. Zur Sicherstellung einer optimalen Ausrichtung des bandförmigen Bindematerials 40 gegenüber dem Schweißelement 126 verfügt die hintere Klemmvorrichtung 110 über Fangzähne 124. Diese Fangzähne 124 umfassen in der Klemmposition das bandförmige Bindematerial 40 und zentrieren es. Dazu verfügt das in Fig. 23 dargestellte Gegenschwenkelement 92 über den Fangzähnen 124 gegenüberliegende Ausnehmungen.

Auch die hintere Klemmvorrichtung 110 wird über einen Hebel, eine Hebelwelle und eine Kurvenscheibe, die auf der Steuerwelle 38 angeordnet ist, gesteuert. Hier ist wiederum eine Überlastsicherung in Form eines Federpaketes zwischen Hebelwelle und hinterer Klemmvorrichtung 110 vorgesehen. Die Überlastsicherung ist auch zur Feineinstellung der Klemmkraft der hinteren Klemmvorrichtung 110 nutzbar.

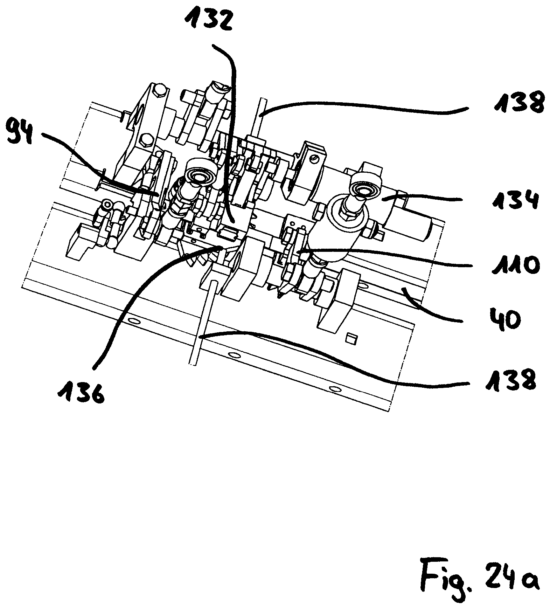

Fig. 24a zeigt die vordere Klemmvorrichtung 94, die hintere Klemmvorrichtung 110 sowie die Reibschweißeinrichtung 132 auf dem Bindetisch. Zusätzlich sind zwei Zuführelemente 138 dargestellt, die Teil der Luftkühlungseinrichtung sind. An ihrem dem bandförmigen Bindematerial 40 zugewandten Ende befindet sich jeweils eine Düse 136. Durch Zuführelement 138 und Düse 136 gelangt ein Luftstrom an die unter dem Schweißelement 126 liegenden Abschnitte des bandförmigen Bindematerials 40, wodurch das Erkalten der Schweißstelle beschleunigt wird.

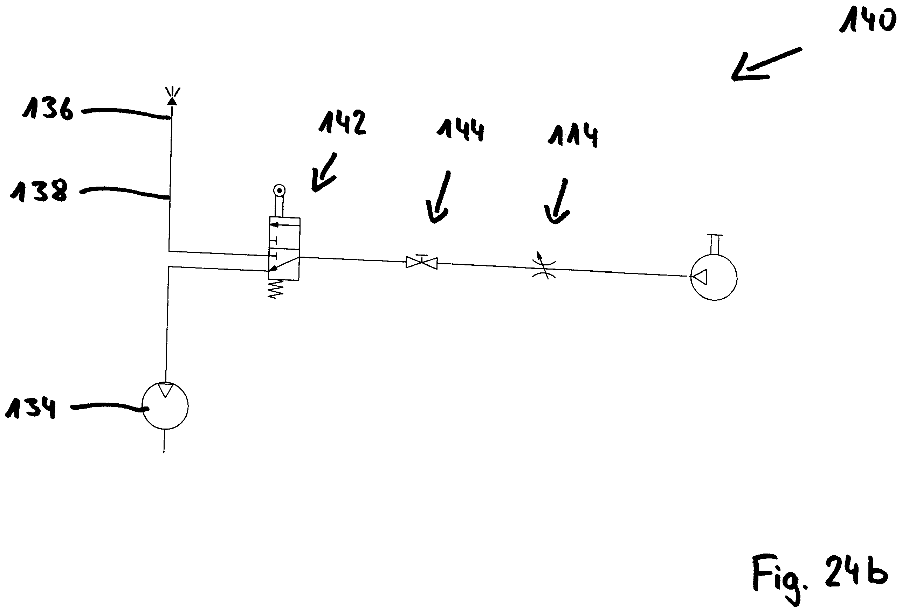

Fig. 24b zeigt einen Schaltplan der Kühleinrichtung. Die dadurch symbolisch dargestellte Regelvorrichtung 140 umfasst ein Druckluftventil 144 und ein Umschaltventil 142. Das Umschaltventil 142 kann einen Druckluftstrom zum Druckluftmotor 134 und nach Beenden des Schweißens über das Zuführelement 138 der Düse 136 zuführen.

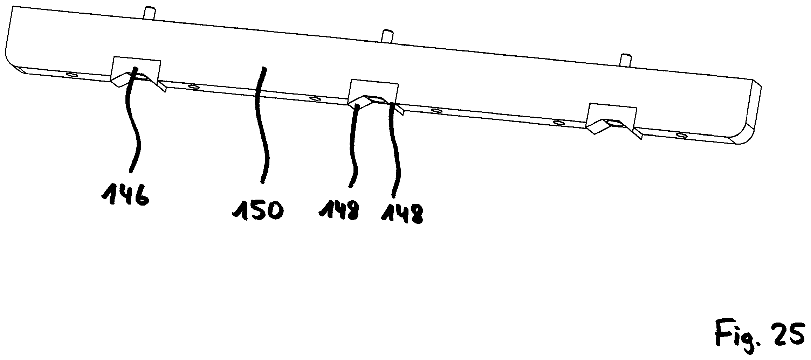

Fig. 25 zeigt drei Bandführungselemente 146, die jeweils einer Bindeeinrichtung zugeordnet sind. Die Bandführungselemente 146 sind einstellbar an einem Führungsträgerelement 150 angeordnet. Die Bandführungselemente 146 verfügen jeweils über zwei Führungsabsätze 148, die bei Anliegen des bandförmigen Bindematerials 40 für eine Zentrierung dieses sorgen. Durch die Bandführungselemente 146 wird die Ausrichtung der unteren der beiden zu verschweißenden Lagen des bandförmigen Bindematerials 40 sichergestellt. Fig. 8 zeigt, dass das Führungsträgerelement 150 dazu hinter der hinteren Klemmvorrichtung 110 auf dem Bindetisch angeordnet ist.

### Bezugsziffernliste:

- 2: Ballenpresse
- 4: Presskanal
- 8: Schwingenschwenkachse
- 10: Antriebsanordnung
- 12: Nadelschwinge
- 14: Bindenadel
- 16: Antriebsdrehachse
- 18: Antriebselement
- 20: Antriebshebel
- 22: Koppeleinrichtung
- 24: Koppelschwenkachse
- 26: erster Koppelhebel
- 28: weitere Koppelhebel
- 30: Antriebshebeldrehachse
- 32: Antriebskoppelschwenkachse
- 34: Presskolben
- 36: Führungsrolle
- 38: Steuerwelle
- 40: Bandförmiges Bindematerial
- 42: Stoffschlusserzeuger
- 44: Bremskontaktfläche
- 46: Abrolleinrichtung
- 48: Regeleinrichtung
- 50: Regelelement
- 52: Bremselement
- 54: Bremsrückstellelement
- 56: Bandrolle
- 58: Bandrollenträger
- 60: Längsmittelachse des Presskanals
- 62: Abrolldrehachse
- 64: Regelelementschwenkachse
- 66: Führungselement
- 68: Bremselementfläche
- 70: Übertragungsvorrichtung
- 72: Steuerhebel
- 74: Umlenkelement
- 76: Bandspeicher
- 78: Bandspeicherachskörper
- 80: Freiachskörper
- 82: Bandspeicherrückstellelement
- 86: Gegenhalter
- 88: Schwenkelement
- 90: Schwenkelementsteuerhebel
- 92: Gegenschwenkelement
- 94: Vordere Klemmvorrichtung
- 96: Gegenhalterschwenkachse
- 98: Teilzahnkreis
- 100: Schneidvorrichtung
- 102: Gegenschneide
- 104: Klemmarm
- 106: Fixieranordnung
- 108: Vorsprung
- 110: Hintere Klemmvorrichtung
- 112: Schneidarm
- 114: Drossel
- 118: Niederhalter
- 120: Niederhalterschwenkachse
- 122: Anschlagspunkt
- 124: Fangzähne
- 126: Schweißelement
- 128: Schweißklemmeinrichtung
- 130: Schweißeinrichtungsschwenkachse
- 132: Reibschweißeinrichtung
- 134: Druckluftmotor
- 136: Düse
- 138: Zuführelement
- 140: Regelvorrichtung
- 142: Umschaltventil
- 144: Druckluftventil
- 146: Bandführungselement
- 148: Führungsabsatz
- 150: Führungsträgerelement

## Patentansprüche

1. Ballenpresse (2) für landwirtschaftliches Erntegut mit einem Presskanal (4) und mit mindestens einer Bindeeinrichtung für ein bandförmiges Bindematerial (40), vorzugsweise aus einem verschweißbaren oder verklebbaren Kunststoffmaterial, zur Umhüllung des zu pressenden Ballens, wobei die Bindeeinrichtung einen Bindetisch mit einem das Bindematerial (40) stoffschlüssig verbindenden Stoffschlusserzeuger (42) aufweist, wobei die Ballenpresse (2) einen im Presskanal (4) entlang einer Längsmittelachse (60) des Presskanals (4) bewegbaren Presskolben (34) aufweist, **dadurch gekennzeichnet, dass** die Bindeeinrichtung eine zwischen dem Stoffschlusserzeuger (42) und dem Presskolben (34) angeordnete vordere Klemmvorrichtung (94) mit einem Gegenhalter (86) umfasst, wobei der Gegenhalter (86) schwenkbeweglich gegenüber dem Bindetisch um eine Gegenhalterschwenkachse (96) angeordnet ist, welche in einer oder parallel zu einer Vertikalebene positioniert ist, wobei die Vertikalebene im Wesentlichen senkrecht zu einer Bodenebene des Presskanals (4) ist und die Längsmittelachse (60) des Presskanals (4) umfasst, wobei ein Federelement bei ausbleibender Krafteinwirkung durch das bandförmige Bindematerial (40) den Gegenhalter (86) in die Gegenhalteposition zurückstellt.

2. Ballenpresse (2) nach Anspruch 1, **dadurch gekennzeichnet, dass** der Gegenhalter (86) einen als Gegenschneide (102) für eine von der vorderen Klemmvorrichtung (94) umfasste Schneidvorrichtung (100) ausgebildeten Bereich aufweist.

3. Ballenpresse (2) nach Anspruch 1 oder 2, **dadurch gekennzeichnet, dass** die vordere Klemmvorrichtung (94) einen Klemmarm (104) aufweist und eine Fixieranordnung (106) am Klemmarm (104) und am Gegenhalter (86) derart angeordnet ist, dass der Gegenhalter (86) einen zu einem Teil des Klemmarms (104) komplementär ausgebildeten Bereich umfasst und dass der Gegenhalter (86) durch die Fixieranordnung (106) formschlüssig in der Gegenhalteposition fixiert angeordnet ist, wenn die vordere Klemmvorrichtung (94) in einer Klemmstellung positioniert ist.

4. Ballenpresse (2) nach einem der vorhergehenden Ansprüche, **dadurch gekennzeichnet, dass** der Bindeeinrichtung mindestens eine eine stoffschlüssige Verbindung des Bindematerials (40) kühlende Kühlungseinrichtung zugeordnet ist.

5. Ballenpresse (2) nach Anspruch 4, **dadurch gekennzeichnet, dass** der Stoffschlusserzeuger (42) eine mindestens zwei Bereiche des Bindematerials (40) verschweißende Schweißeinrichtung aufweist, wobei die zwei Bereiche des Bindematerials (40) beim Verschweißen jeweils mit der Längsseite des Bindematerialquerschnittes zumindest teilweise aneinander anliegend angeordnet sind.

6. Ballenpresse (2) nach Anspruch 5, **dadurch gekennzeichnet, dass** die Schweißeinrichtung ein Schweißelement (126) umfasst und die Schweißeinrichtung aus einer Schweißstellung, in der das Schweißelement (126) an mindestens einem der mindestens zwei zu verschweißenden Bereichen des Bindematerials (40) anliegend angeordnet ist, bewegbar gegenüber dem Presskanal (4) angeordnet ist.

7. Ballenpresse (2) nach Anspruch 5 oder 6, **dadurch gekennzeichnet, dass** die mindestens zwei zu verschweißenden Bereiche des Bindematerials (40) zwischen einer von der Schweißeinrichtung umfassten und in der Schweißstellung an mindestens einem der mindestens zwei zu verschweißenden Bereichen des Bindematerials (40) anliegenden Schweißklemmeinrichtung (128) und einem an mindestens einem der mindestens zwei zu verschweißenden Bereichen des Bindematerials (40) anliegenden Schwenkelement (88) geklemmt angeordnet sind.

8. Ballenpresse (2) nach Anspruch 6 oder 7, **dadurch gekennzeichnet, dass** die Schweißeinrichtung um eine im Wesentlichen gegenüber dem Presskanal (4) ortsfeste und zur Längsmittelachse (60) des Presskanals (4) im Wesentlichen parallele Schweißeinrichtungsschwenkachse (130) schwenkbar und aus der Schweißstellung bewegbar angeordnet ist.

9. Ballenpresse (2) nach einem der Ansprüche 5 bis 8, **dadurch gekennzeichnet, dass** die Schweißeinrichtung als eine zwei Bereiche des Bindematerials (40) durch Reibschweißen verschweißende Reibschweißeinrichtung (132) ausgestaltet ist.

10. Ballenpresse (2) nach Anspruch 9, **dadurch gekennzeichnet, dass** die Reibschweißeinrichtung (132) einen das Schweißelement antreibenden Druckluftmotor (134) umfasst.

11. Ballenpresse (2) nach einem der vorhergehenden Ansprüche, **dadurch gekennzeichnet, dass** die Bindeeinrichtung die zwischen dem Stoffschlusserzeuger (42) und dem Presskolben (34) angeordnete vordere Klemmvorrichtung (94) und eine auf der dem Presskolben (34) abgewandten Seite des Stoffschlusserzeugers (42) angeordnete hintere Klemmvorrichtung (110) aufweist.

12. Ballenpresse (2) nach einem der vorhergehenden Ansprüche, zumindest jedoch nach Anspruch 4, **dadurch gekennzeichnet, dass** die vordere Klemmvorrichtung (94) den Klemmarm (104) und einen Schneidarm (112) aufweist.

13. Ballenpresse (2) nach Anspruch 12, **dadurch gekennzeichnet, dass** der Klemmarm (104) relativ zu dem Schneidarm (112) verschieblich und beim Übergang der vorderen Klemmvorrichtung (94) in die Klemmstellung voreilend angeordnet ist, wobei zwischen dem Klemmarm (104) und dem Schneidarm (112) ein eine Kraft vom Schneidarm (112) auf den Klemmarm (104) übertragendes Federelement angeordnet ist.

14. Ballenpresse (2) nach einem der Ansprüche 11 bis 13, **dadurch gekennzeichnet, dass** an der vorderen Klemmvorrichtung (94) ein Niederhalter (118) schwenkbar angeordnet ist.

15. Ballenpresse (2) nach Anspruch 14, **dadurch gekennzeichnet, dass** der Niederhalter (118) um eine Niederhalterschwenkachse (120) schwenkbar ist, die gegenüber einer zur Längsmittelachse (60) des Presskanals (4) senkrechten Ebene durch einen Anschlagspunkt des Niederhalters (118) eine Neigung zwischen 20° und 40° aufweist.

## Claims

1. Baling press (2) for agricultural crops, comprising a pressing channel (4) and comprising at least one binding device for a tape-like binding material (40), preferably consisting of a weldable or gluable plastics material, for wrapping the bale to be pressed, wherein the binding device comprises a binding table with a material bond producer (42) which materially bonds the binding material (40), wherein the baling press (2) comprises a pressing plunger (34) which is movable in the pressing channel (4) along a longitudinal central axis (60) of the pressing channel (4), **characterized in that** the binding device comprises a front clamping device (94), which is arranged between the material bond producer (42) and the pressing plunger (34) and has a counter-support (86), wherein the counter-support (86) is arranged such as to be able to pivot relative to the binding table about a counter-support pivot axis (96) which is positioned in or parallel to a vertical plane, wherein the vertical plane is substantially perpendicular to a bottom plane of the pressing channel (4) and includes the longitudinal central axis (60) of the pressing channel (4), wherein a spring element returns the counter-support (86) to the counter-supporting position when no force is being applied by the tape-like binding material (40).

2. Baling press (2) according to claim 1, **characterized in that** the counter-support (86) has a region designed as a shear bar (102) for a cutting device (100) comprised by the front clamping device (94).

3. Baling press (2) according to claim 1 or 2, **characterized in that** the front clamping device (94) comprises a clamping arm (104), and a fixing arrangement (106) is arranged on the clamping arm (104) and on the counter-support (86) such that the counter-support (86) comprises a region which is complementary to part of the clamping arm (104) and such that the counter-support (86) is fixedly arranged in the counter-supporting position by the fixing arrangement (106) in a form-fitting manner when the front clamping device (94) is positioned in a clamping position.

4. Baling press (2) according to any one of the preceding claims, **characterized in that** the binding device is assigned at least one cooling device which cools a material bond of the binding material (40).

5. Baling press (2) according to claim 4, **characterized in that** the material bond producer (42) comprises a welding device which welds at least two regions of the binding material (40), wherein, during the welding, the two regions of the binding material (40) are each arranged with the longitudinal side of the binding material cross-section at least partially bearing against one another.

6. Baling press (2) according to claim 5, **characterized in that** the welding device comprises a welding element (126) and the welding device is arranged relative to the pressing channel (4) such as to be movable out of a welding position, in which the welding element (126) is arranged bearing against at least one of the at least two regions of the binding material (40) that are to be welded.

7. Baling press (2) according to claim 5 or 6, **characterized in that** the at least two regions of the binding material (40) that are to be welded are arranged in a clamped manner between a welding clamping device (128), which is comprised by the welding device and in the welding position bears against at least one of the at least two regions of the binding material (40) that are to be welded, and a pivoting element (88) which bears against at least one of the at least two regions of the binding material (40) that are to be welded.

8. Baling press (2) according to claim 6 or 7, **characterized in that** the welding device is arranged such as to be pivotable about a welding device pivot axis (130), which is substantially stationary relative to the pressing channel (4) and substantially parallel to the longitudinal central axis (60) of the pressing channel (4), and such as to be movable out of the welding position.

9. Baling press (2) according to any one of claims 5 to 8, **characterized in that** the welding device is designed as a friction welding device (132) which welds two regions of the binding material (40) by friction welding.

10. Baling press (2) according to claim 9, **characterized in that** the friction welding device (132) comprises an air motor (134) which drives the welding element.

11. Baling press (2) according to any one of the preceding claims, **characterized in that** the binding device comprises the front clamping device (94), which is arranged between the material bond producer (42) and the pressing plunger (34), and a rear clamping device (110), which is arranged on the side of the material bond producer (42) that faces away from the pressing plunger (34).

12. Baling press (2) according to any one of the preceding claims, but at least according to claim 4, **characterized in that** the front clamping device (94) comprises the clamping arm (104) and a cutting arm (112).

13. Baling press (2) according to claim 12, **characterized in that** the clamping arm (104) is displaceable relative to the cutting arm (112) and is arranged in the lead as the front clamping device (94) moves into the clamping position, wherein a spring element, which transmits a force from the cutting arm (112) to the clamping arm (104), is arranged between the clamping arm (104) and the cutting arm (112).

14. Baling press (2) according to any one of claims 11 to 13, **characterized in that** a holding-down device (118) is pivotably arranged on the front clamping device (94).

15. Baling press (2) according to claim 14, **characterized in that** the holding-down device (118) is pivotable about a holding-down device pivot axis (120), which has an inclination of between 20° and 40° relative to a plane through a stop point of the holding-down device (118), said plane being perpendicular to the longitudinal central axis (60) of the pressing channel (4).

## Revendications

1. Presse à balles (2) pour des produits de récolte agricole, comprenant un canal de presse (4) et au moins un dispositif d'attache pour un matériau d'attache en forme de bande (40), de préférence en matière plastique soudable ou collable, pour envelopper la balle à presser, dans laquelle le dispositif d'attache présente un moyen de génération de liaison de matière (42) qui relie le matériau d'attache (40) par complémentarité de matière, dans laquelle la presse à balles (2) présente un piston de compression (34) mobile dans le canal de presse (4) le long d'un axe central longitudinal (60) du canal de presse (4), **caractérisée en ce que** le dispositif d'attache comprend un moyen de blocage avant (94), disposé entre le moyen de génération de liaison de matière (42) et le piston de compression (34), avec un contre-support (86), dans laquelle le contre-support (86) est monté mobile de manière pivotante par rapport à la table d'attache autour d'un axe de pivotement de contre-support (96) qui est positionné dans un plan vertical ou parallèle à celui-ci, dans laquelle le plan vertical est sensiblement perpendiculaire à un plan au fond du canal de presse (4) et comprend l'axe central longitudinal (60) du canal de presse (4), dans laquelle un élément de ressort repousse le contre-support (86) dans la position de contre-support en l'absence d'une force appliquée par l'intermédiaire du matériau d'attache en forme de bande (40).

2. Presse à balles (2) selon la revendication 1, **caractérisée en ce que** le contre-support (86) présente une zone réalisée sous la forme d'une contre-découpe (102) pour un moyen de coupe (100) contenu par le moyen de blocage avant (94).

3. Presse à balles (2) selon la revendication 1 ou 2, **caractérisée en ce que** le moyen de blocage avant (94) présente un bras de blocage (104) et un ensemble de fixation (106) est disposé sur le bras de blocage (104) et sur le contre-support (86) de telle sorte que le contre-support (86) comprend une zone réalisée de manière complémentaire à une partie du bras de blocage (104) et que le contre-support (86) est disposé par l'ensemble de fixation (106) de manière fixe dans la position de contre-support par complémentarité de forme lorsque le moyen de blocage avant (94) est positionné dans une position de blocage.

4. Presse à balles (2) selon une des revendications précédentes, **caractérisée en ce qu'**au moins un moyen de refroidissement, refroidissant une liaison du matériau d'attache (40) par complémentarité de matière, est associé au dispositif d'attache.

5. Presse à balles (2) selon la revendication 4, **caractérisée en ce que** le moyen de génération de liaison de matière (42) présente un moyen de soudage qui soude au moins deux zones du matériau d'attache (40), dans laquelle les deux zones du matériau d'attache (40) sont, lors du soudage, disposées respectivement avec le côté longitudinal de la coupe transversale du matériau d'attache au moins en partie de manière adjacente l'une à l'autre.

6. Presse à balles (2) selon la revendication 5, **caractérisée en ce que** le moyen de soudage comprend un élément de soudage (126) et le moyen de soudage est monté mobile par rapport au canal de presse (4) depuis une position de soudage dans laquelle l'élément de soudage (126) est disposé de manière adjacente à au moins une des deux zones à souder du matériau d'attache (40).

7. Presse à balles (2) selon la revendication 5 ou 6, **caractérisée en ce que** les au moins deux zones à souder du matériau d'attache (40) sont disposées bloquées entre un moyen de blocage par soudage (128), contenu par le moyen de soudage et adjacent dans la position de soudage à au moins une des au moins deux zones à souder du matériau d'attache (40), et un élément de pivotement (88) adjacent à au moins une des au moins deux zones à souder du matériau d'attache (40).

8. Presse à balles (2) selon la revendication 6 ou 7, **caractérisée en ce que** le moyen de soudage est monté pivotant autour d'un axe de pivotement de moyen de soudage (130) sensiblement fixe par rapport au canal de presse (4) et sensiblement parallèle à l'axe central longitudinal (60) du canal de presse (4) et mobile depuis la position de soudage.

9. Presse à balles (2) selon une des revendications 5 à 8, **caractérisée en ce que** le moyen de soudage est réalisé sous la forme d'un moyen de soudage par friction (132) soudant deux zones du matériau d'attache (40) par soudage par friction.

10. Presse à balles (2) selon la revendication 9, **caractérisée en ce que** le moyen de soudage par friction (132) comprend un moteur à air comprimé (134) entraînant l'élément de soudage.

11. Presse à balles (2) selon une des revendications précédentes, **caractérisée en ce que** le dispositif d'attache présente le moyen de blocage avant (94) disposé entre le moyen de génération de liaison de matière (42) et le piston de compression (34) et un moyen de blocage arrière (110) disposé sur la face opposée au piston de compression (34) du moyen de génération de liaison de matière (42).

12. Presse à balles (2) selon une des revendications précédentes, mais au moins selon la revendication 4, **caractérisée en ce que** le moyen de blocage avant (94) présente le bras de blocage (104) et un bras de coupe (112).

13. Presse à balles (2) selon la revendication 12, **caractérisée en ce que** le bras de blocage (104) est monté mobile par rapport au bras de coupe (112) et de manière séquentielle lors de la jonction du moyen de blocage avant (94) dans la position de blocage, dans laquelle entre le bras de blocage (104) et le bras de coupe (112) est disposé un élément de ressort qui transmet une force du bras de coupe (112) sur le bras de blocage (104).

14. Presse à balles (2) selon une des revendications 11 à 13, **caractérisée en ce que**, sur le moyen de blocage avant (94), un serre-flan (118) est monté pivotant.

15. Presse à balles (2) selon la revendication 14, **caractérisée en ce que** le serre-flanc (118) est pivotant autour d'un axe de pivotement de serre-flanc (120) qui présente une inclinaison entre 20° et 40° par rapport à un plan perpendiculaire à l'axe central longitudinal (60) du canal de presse (4) à travers un point de butée du serre-flanc (118).
